(19) **Europäisches Patentamt / European Patent Office / Office européen des brevets**

(11) **EP 2 883 091 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(21) Anmeldenummer: **13747671.9**

(22) Anmeldetag: **09.08.2013**

(51) Int Cl.:
**G02B 6/00** (2006.01)     **F21V 8/00** (2006.01)

(86) Internationale Anmeldenummer:
**PCT/EP2013/066686**

(87) Internationale Veröffentlichungsnummer:
**WO 2014/026917 (20.02.2014 Gazette 2014/08)**

(54) **BELEUCHTUNGSVORRICHTUNG FÜR EINE FLÜSSIGKRISTALLANZEIGE**

ILLUMINATION DEVICE FOR A LIQUID CRYSTAL DISPLAY

DISPOSITIF D'ÉCLAIRAGE POUR UN AFFICHAGE À CRISTAUX LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2012 EP 12180244**

(43) Veröffentlichungstag der Anmeldung:
**17.06.2015 Patentblatt 2015/25**

(73) Patentinhaber: **Covestro Deutschland AG**
**51373 Leverkusen (DE)**

(72) Erfinder:
• **FÄCKE, Thomas**
**51375 Leverkusen (DE)**
• **BRUDER, Friedrich-Karl**
**47802 Krefeld (DE)**
• **HAGEN, Rainer**
**51377 Leverkusen (DE)**
• **WALZE, Günther**
**51377 Leverkusen (DE)**
• **RÖLLE, Thomas**
**51381 Leverkusen (DE)**
• **BERNETH, Horst**
**51373 Leverkusen (DE)**
• **HÖNEL, Dennis**
**53909 Zülpich-Wichterich (DE)**
• **WEISER, Marc-Stephan**
**51377 Leverkusen (DE)**
• **HOHEISEL, Werner**
**51061 Köln (DE)**

(74) Vertreter: **Levpat**
**c/o Covestro AG**
**Gebäude 4825**
**51365 Leverkusen (DE)**

(56) Entgegenhaltungen:
**US-A- 5 854 697      US-A1- 2006 187 377
US-A1- 2006 279 296   US-A1- 2007 081 359**

**Beschreibung**

Die Erfindung betrifft eine Beleuchtungsvorrichtung zum Beleuchten von mindestens einer Lichtmodulatoreinrichtung einer Flüssigkristallanzeige, umfassend mindestens ein Lichtleitersubstrat zum Leiten von mindestens einem in das Lichtleitersubstrat einkoppelbaren, gerichteten Lichtstrahl, wobei das Lichtleitersubstrat mit mindestens einem holographisch-optischen Auskoppelungssubstrat umfassend eine Mehrzahl von Auskoppelungsbereichen zumindest in einem optischen Kontakt steht, wobei ein Auskoppelungsbereich zumindest dazu eingerichtet ist, einen Teil des gerichteten Lichtstrahls in Form einer Vielzahl von Teilstrahlen in Richtung der Lichtmodulatoreinrichtung auszukoppeln. Darüber hinaus betrifft die Erfindung ein Beleuchtungssystem und eine Flüssigkristallanzeige.

In der heutigen Zeit haben Flüssigkristallanzeigen, auch LC-Displays (Liquid Crystal Displays) genannt, eine weite Verbreitung erlangt. Derartige Displays finden sich mit unterschiedlichen Formen in einer Vielzahl von Anwendungen, wie Mobilgeräten, beispielsweise Mobiltelefonen, Spielcomputer, Laptops, Tablet-PCs, oder Desktopmonitoren, Fernseher, Werbetafeln und Gebäudeinstallationen.

Flüssigkristallanzeigen weisen mindestens eine elektrisch ansteuerbare Schicht mit Flüssigkristallen auf, die in Abhängigkeit der angelegten elektrischen Spannung die Polarisation des Lichts verändert. Diese Schicht wird auch als Lichtmodulator bezeichnet. Der Lichtmodulator ist insbesondere ein lichtdurchlässiger digitaler räumlicher Lichtmodulator. Der Lichtmodulator kann zusammen mit weiteren Schichten, wie Polarisatorschichten, eine Lichtmodulatoreinrichtung bilden.

Ferner umfasst eine Flüssigkristallanzeige eine rückwärtige Beleuchtungsvorrichtung, auch Backlight Unit (BLU) genannt, welche zur Lichterzeugung und Lenkung des Lichts in Richtung der Lichtmodulatoreinrichtung vorgesehen ist. Im Stand der Technik werden Kaltkathodenleuchtstofflampen und lichtemittierende Dioden (LEDs) zur Lichterzeugung in der Beleuchtungsvorrichtung verwendet. Die Abstrahlungscharakteristik dieser Lichtquellen ist derart, dass diese ungerichtetes Licht abstrahlen. Hierbei ist aus dem Stand der Technik neben einer direkten Beleuchtung auch die Möglichkeit bekannt, dass ungerichtete Licht an einer Kante der Beleuchtungsvorrichtung einzustrahlen bzw. einzukoppeln.

Die direkte Beleuchtung besitzt den Vorteil, dass das Licht durch geeignete räumliche Positionierung der einzelnen Lichtquellen sehr homogen über die Gesamtgröße der Lichtmodulatoreinrichtung verteilt werden kann, was insbesondere ein Qualitätskriterium für alle Arten von LC-Displays ist. Die Nutzung von LEDs in einer direkten Beleuchtung bringt ferner den Vorteil mit sich, dass diese sich dimmen lassen und so zu einem erhöhten Kontrastwert des Displays führen. Nachteilig an der direkten Beleuchtung sind die hohen Kosten und der Energieverbrauch, da eine Vielzahl von Leuchtquellen nötig ist.

Bei der alternativen Beleuchtungstechnik sind Leuchtquellen an den Kanten eines Lichtleitersubstrats montiert, welche das Licht in das Lichtleitersubstrat einstrahlen. Von dieser seitlichen Position aus wird das Licht durch Totalreflexion in Richtung Displaymitte geleitet. Durch an der rückwärtigen Flächenseite des Lichtleitersubstrats angebrachte Lichtauskoppelemente wird das Licht nach vorne in Richtung der Lichtmodulatoreinrichtung gelenkt. Typische Lichtauskoppelelemente sind dabei gedruckte Muster aus weißer Farbe, angeraute Oberflächen oder eingeprägte lichtbrechende Strukturen. Die Anzahl der Dichte dieser Strukturen lässt sich frei wählen und erlaubt eine recht homogene Ausleuchtung des Displays. Entsprechende ausgebildete Displays weisen jedoch nur reduzierte Darstellungsqualitäten auf.

Neben dem stetigen Anliegen, Flüssigkristallanzeigen mit einer geringeren Schichtdicke und einem geringeren Energieverbrauch herzustellen, ist es jedoch ein wesentliches Ziel, Flüssigkristallanzeigen mit verbesserten Darstellungsqualitäten zur Verfügung zu stellen. Messgrößen, welche Aufschluss über die Darstellungsqualität geben, sind unter anderem die Größe des Farbraums (Gamut), die Homogenität der Ausleuchtung (Leuchtdichteverteilung), das Kontrastverhältnis, sowie eine farbneutrale, d.h. unabhängig vom Schaltzustand der LC-Zelle spektral unveränderte Darstellung. Aus dem Stand der Technik ist es bekannt, spezielle LC-Zellen, wie Double Super Twisted Nematic (DSTN) oder Film-Supertwisted (FST), im Lichtmodulator einzusetzen, um eine farbpräziser Darstellung zu erhalten.

Die US 2007/0081359 A1 und US 2006/0279296 A1 offenbaren Beleuchtungsvorrichtungen mit Holographisch-optischen Auskoppelungssubstraten und Diffusormodulen. Weiterhin kann die Farbtreue des einzelnen Pixels verbessert werden, wenn die spektrale Bandbreite der Lichtquelle verkleinert wird, da dadurch die Farbmischung präziser gelingt.

Die Energieeffizienz und die Farbtreue von LC-Displays lassen sich insbesondere durch die Verwendung spektral schmalbandig emittierender Lichterzeugungseinrichtungen erhöhen. Die Lichterzeugungseinrichtung ist insbesondere dazu eingerichtet, einen gerichteten Lichtstrahl zu erzeugen. Ein gerichteter Lichtstrahl besteht aus elektromagnetischer Strahlung, dessen Energiefluß in einer Richtung erfolgt und deren Divergenz weniger als 0.052 rad bevorzugt weniger als 0.026 rad besonders bevorzugt weniger als 0.017 rad beträgt. Beispielsweise ist aus dem Stand der Technik bekannt, eine Lasereinrichtung, wie eine Laserdiode, als Erzeugungseinrichtung für einen gerichteten Lichtstrahl einzusetzen.

So ist aus der US 5 854 697 A eine Beleuchtungsvorrichtung bekannt, die ein Lichtleitersubstrat zum Leiten eines gerichteten Lichtstrahls aufweist. Der gerichtete Lichtstrahl wird an einer Kante des Lichtleitersubstrats mit einem bestimmten Einkoppelwinkel eingestrahlt und propagiert im Lichtleitersubstrat. Das Lichtleitersubstrat steht ferner mit einem holographisch-optischen Auskoppelungssubstrat umfassend eine Mehrzahl von Auskoppelungsbereichen in optischen Kontakt. Unter einem Auskoppelungsbereich ist insbesondere der Bereich im holographisch-optischen Auskoppelungssubstrat zu verstehen, in dem der gerichtete Lichtstrahl in das holographisch-optische Auskoppelungssubstrat eindringt und teilweise ausgekoppelt wird.

Das holographisch-optische Auskoppelungssubstrat kann dabei entlang des Lichtleitersubstrats variierende Beugungseffizienzen haben, um entlang des Wellenleiters eine einheitliche Auskopplungsintensität zu ermöglichen. Als Aufzeichnungsmaterial für das holographisch-optische Auskoppelungssubstrat wird in der US 5 854 697 A eine photografische Emulsion verwendet.

Zwar kann durch diesen Stand der Technik die Schichtdicke der Beleuchtungsvorrichtung verringert und gleichzeitig der Energieverbrauch reduziert werden. Problematisch bei diesem Stand der Technik ist jedoch, dass das ausgekoppelte Licht gerichtet und in eine Richtung parallel zur Flächennormale des Lichtleitersubstrats ausgestrahlt wird. Dies bringt das Problem mit sich, dass die Beleuchtungsvorrichtung unterschiedliche Helligkeiten für die Augen eines Betrachters aufweist. Folglich wird eine Lichtmodulatoreinrichtung, insbesondere die einzelnen Pixel eines Lichtmodulators, mit unterschiedlichen Lichtintensitäten angestrahlt. Dies führt zu einer Flüssigkristallanzeige mit reduzierten Darstellungsqualitäten.

Daher liegt der Erfindung die Aufgabe zugrunde, eine Beleuchtungsvorrichtung zum Beleuchten von mindestens einer Lichtmodulatoreinrichtung einer Flüssigkristallanzeige zur Verfügung zu stellen, welche eine geringe Schichtdicke und einen geringen Energieverbrauch aufweist und gleichzeitig eine verbesserte Darstellungsqualität der Flüssigkristallanzeige gewährleistet.

Die Aufgabe wird erfindungsgemäß bei einer Beleuchtungsvorrichtung gemäß dem vorliegenden Patentanspruch 1 gelöst. Die Beleuchtungsvorrichtung zum Beleuchten von mindestens einer Lichtmodulatoreinrichtung einer Flüssigkristallanzeige umfasst mindestens ein Lichtleitersubstrat zum Leiten von mindestens einem in das Lichtleitersubstrat einkoppelbaren, gerichteten Lichtstrahl. Das Lichtleitersubstrat steht mit mindestens einem holographisch-optischen Auskoppelungssubstrat umfassend eine Mehrzahl von Auskoppelungsbereichen zumindest in einem optischen Kontakt. Ein Auskoppelungsbereich ist zumindest dazu eingerichtet, einen Teil des gerichteten Lichtstrahls in Form einer Vielzahl von Teilstrahlen in Richtung der Lichtmodulatoreinrichtung auszukoppeln. Die Beleuchtungsvorrichtung umfasst mindestens ein Diffusormodul. Das Diffusormodul ist eingerichtet, derart, dass zumindest die äußersten Teilstrahlen zweier benachbarter Auskoppelungsbereiche vor dem Austritt aus dem Diffusormodul zumindest aneinander grenzen. Indem im Gegensatz zum Stand der Technik erfindungsgemäß mindestens ein Diffusormodul zum diffusen Aufweiten der ausgekoppelten Lichtstrahlen vorgesehen ist, wird erzielt, dass die ausgekoppelten Lichtstrahlen mit homogener Intensität und mit homogener Winkelverteilung einen Pixel basierten räumlichen Lichtmodulator erreichen. Bei der Flüssigkristallanzeige wird visuell sichtbare Inhomogenität in der lateralen Lichtverteilung vermieden. Insbesondere wird eine verbesserte Darstellungsqualität dadurch erreicht, dass das Diffusormodul derart eingerichtet ist, dass die äußersten ausgekoppelten Lichtstrahlen zweier (unmittelbar) benachbarter Auskoppelbereiche zumindest aneinander grenzen, wobei sich diese Lichtstrahlen vorzugsweise überlappen können.

Die Beleuchtungsvorrichtung umfasst ein Lichtleitersubstrat. Das Lichtleitersubstrat oder auch Wellenleiter genannt, ist dazu eingerichtet, mindestens einen gerichteten Laserlichtstrahl zu leiten. Der gerichtete Lichtstrahl kann an einer Kante des Lichtleitersubstrats eingekoppelt bzw. eingestrahlt werden. Insbesondere wird der Lichtstrahl mit einem vorgebbaren Einkoppelwinkel eingestrahlt. Der gerichtete Lichtstrahl kann durch das Lichtleitersubstrat durch Totalreflexion an den Grenzflächen des Lichtleitersubstrats bzw. des mit dem Lichtleitersubstrat in optischen Kontakt stehenden holographisch-optischen Auskoppelungssubstrat propagieren. Es versteht sich, dass eine Mehrzahl an gerichteten Lichtstrahlen an einer Kante eingekoppelt werden können, wie nachfolgend ausgeführt werden wird.

Darüber hinaus ist ein holographisch-optisches Auskoppelungssubstrat vorgesehen, welches mit dem Lichtleitersubstrat in unmittelbaren optischen Kontakt ist. Beispielsweise kann das Lichtleitersubstrat das holographisch-optische Auskoppelungssubstrat umfassen. Der optische Kontakt zwischen den Elementen kann beispielsweise durch direkte Lamination des holographisch-optischen Auskoppelungssubstrats auf dem Lichtleitersubstrat erreicht werden. Alternativ kann der optische Kontakt beispielsweise mittels einer Flüssigkeit hergestellt werden. Die eingesetzte Flüssigkeit kann einen Brechungsindex aufweisen, der dem Brechungsindex des holographisch-optischen Auskoppelungssubstrats und/oder des Lichtleitersubstrats entspricht. Wenn sich der Brechungsindex des holographisch-optischen Auskoppelungssubstrats von dem Brechungsindex des Lichtleitersubstrats unterscheidet, kann der Brechungsindex der Flüssigkeit zwischen diesen Werten liegen. Vorteilhafterweise weisen derartige Flüssigkeiten einen hinreichend niedrige Flüchtigkeit für eine permanente Haftanwendung auf. In einer weiteren bevorzugten Alternative kann der optische Kontakt durch einen optisch transparenten Klebstoff hergestellt werden, der als Flüssigkeit appliziert werden kann. Alternativ kann ein Transferklebstofffilm verwendet werden. Der Brechungsindex eines eingesetzten Klebstoffs kann entsprechend dem Brechungsindex der zuvor beschriebenen Flüssigkeit gewählt werden.

Das holographisch-optische Auskoppelungssubstrat kann aus einem Aufzeichnungsmaterial für Volumenhologramme gebildet sein. Das holographisch-optische Auskoppelungssubstrat weist eine Mehrzahl von Auskoppelungsbereichen auf, wobei ein Auskoppelungsbereich zumindest dazu eingerichtet ist, einen Teil des gerichteten Lichtstrahls in Form einer Vielzahl von Teilstrahlen in Richtung der Lichtmodulatoreinrichtung zu lenken. Ein Auskoppelungsbereich ist insbesondere der Bereich in einem holographisch-optischen Auskoppelungssubstrat, in welchem der gerichtete Lichtstrahl teilweise ausgekoppelt bzw. abgebeugt wird. Dieser Bereich hängt unter anderem von der Ausbildung des holographisch-optischen Auskoppelungssubstrats und der Strahlbreite des eingekoppelten gerichteten Lichtstrahls ab.

Es ist erfindungsgemäß erkannt worden, dass eine Lichtmodulatoreinrichtung hinreichend homogen beleuchtet werden kann, wenn ein Diffusormodul vorgesehen und derart eingerichtet ist, dass zumindest die äußersten Teilstrahlen zweier benachbarter Auskoppelungsbereiche vor dem Austritt aus dem Diffusormodul zumindest aneinander grenzen. Unter zwei benachbarten Auskoppelungsbereichen sind insbesondere die unmittelbar benachbarten Auskoppelungsbereiche zu verstehen, zwischen denen kein weiterer Auskoppelungsbereich angeordnet ist. In einem Spezialfall können die Auskoppelungsbereiche direkt aneinander grenzen. Indem die äußersten Teilstrahlen zumindest aneinander grenzen, vorzugsweise überlappen, bevor sie das Diffusormodul verlassen, wird sichergestellt, dass das Diffusormodul als eine flächige Leuchtquelle mit einer homogenen Lichtintensität ausgebildet ist. Vorzugsweise grenzen die äußersten Teilstrahlen eines Auskoppelungsbereichs an die äußersten Teilstrahlen sämtlicher unmittelbar mit diesem Auskoppelungsbereich benachbarter Auskoppelungsbereiche vor dem Austritt aus dem Diffusormodul zumindest aneinander, so dass das Diffusormodul keine Bereiche mit geringer Lichtintensität aufweist. Es wird insbesondere als eine einzige Leuchtquelle wahrgenommen.

Eine Beleuchtungsvorrichtung für räumliche Lichtmodulatoren mit elektronischer Pixelansteuerung kann bereitgestellt werden, welche eine hohe Farbtreue durch die Verwendung von gerichteten Lichtstrahlen, beispielsweise von Laserdioden als Lichtquellen, aufweist und Licht effizient und homogen auf den transparenten Lichtmodulator projiziert. Weiterhin weist die erfindungsgemäße Beleuchtungsvorrichtung ein einfaches, flaches und kompaktes Design auf. Ferner kann bei der erfindungsgemäßen Beleuchtungsvorrichtung die Anzahl der Lichtquellen auf ein Minimum begrenzt werden.

Gemäß der erfindungsgemäßen Beleuchtungsvorrichtung ist das Diffusormodul ein separates zwischen dem Lichtleitersubstrat und dem zu beleuchtenden Lichtmodulator angeordnetes Diffusorsubstrat. Das Diffusorsubstrat kann ein Volumenstreuer Das separate Diffusorsubstrat weist zumindest eine transparente Schicht und eine diffus streuende Schicht auf. Die diffus streuende Schicht kann beispielsweise organische oder anorganische Streupartikel aufweisen, welche in eine Trägerschicht eingebettet sein können. Die Streupartikel und die Trägerschicht, beispielsweise die transparente Schicht, weisen unterschiedliche Brechungsindizes auf. In einer besonders bevorzugten Ausführungsform sind die Streupartikel optisch nicht absorbierend und kugelähnlich gebildet. Durch ein separates Diffusorsubstrat kann in einfacher Weise eine gewünschte Diffusorwirkung erreicht werden.

Alternativ oder zusätzlich zu einem separaten Diffusorsubstrat kann das Diffusormodul in dem holographisch-optischen Auskoppelungssubstrat integriert sein. Die optische Funktion der diffusen Strahlaufweitung kann im holographisch-optischen Element 2 selbst umgesetzt sein. Beispielsweise können die Auskoppelungsbereiche eine Diffusorfunktion aufweisen und derart zueinander angeordnet sein, dass sichergestellt werden kann, dass zumindest die äußersten Teilstrahlen zweier benachbarter Auskoppelungsbereiche vor dem Austritt aus dem Diffusormodul, also dem holographisch-optischen Auskoppelungssubstrat, zumindest aneinander grenzen. Der Vorteil eines entsprechenden Aufbaus besteht insbesondere in einer weiteren Reduktion der Schichtdicke der Beleuchtungsvorrichtung. Die Verwendung eines separaten Diffusorsubstrats kann entfallen.

Es versteht sich, dass das separate Diffusorsubstrat mit dem in dem holographisch-optischen Auskoppelungssubstrat integrierten Diffusormodul kombiniert werden kann.

Gemäß der erfindungsgemäßen Beleuchtungsvorrichtung ist zwischen dem separaten Diffusorsubstrat und dem Lichtleitersubstrat eine Zwischenschicht angeordnet. Der Brechungsindex der Zwischenschicht ist zumindest geringer als der Brechungsindex des Lichtleitersubstrats. Durch die Anordnung einer Zwischenschicht (unmittelbar) auf dem Lichtleitersubstrat wird in einfacher Weise eine Totalreflexion des mindestens einen gerichteten Lichtstrahls im Lichtleitersubstrat erzielt. Wenn auf dem Lichtleitersubstrat das holographisch-optische Auskoppelungssubstrat angeordnet ist, kann bei einer alternativen Ausführungsform zwischen dem separaten Diffusorsubstrat und dem holographisch-optischen Auskoppelungssubstrat eine Zwischenschicht angeordnet sein, wobei der Brechungsindex der Zwischenschicht zumindest geringer als der Brechungsindex des holographisch-optischen Auskoppelungssubstrat ist.

Die Zwischenschicht kann grundsätzlich beliebig gebildet sein, solange der Brechungsindex der Zwischenschicht zumindest geringer als der Brechungsindex des Lichtleitersubstrats bzw. des holographisch-optischen Auskoppelungssubstrats ist. Beispielsweise kann die Zwischenschicht eine Gasschicht sein. Die Gasschicht kann in Form eines Luftspalts zwischen dem Lichtleitersubstrat bzw. des holographisch-optischen Auskoppelungssubstrats und dem Diffusorsubstrat gebildet sein. Alternativ oder zusätzlich zu einer Gasschicht kann eine (niedrigbrechende) Klebstoffschicht, eine (niedrigbrechende) Kontaktflüssigkeit, eine (niedrigbrechende) Oberflächenmodifikation des Diffusorsubstrats und/oder eine (niedrigbrechende) Oberflächenmodifikation des holographisch-optischen Auskoppelungssubstrats vorgesehen sein.

Darüber hinaus kann in einer weiteren Ausführungsform der Beleuchtungsvorrichtung vorgesehen sein, dass das holographisch-optische Auskoppelungssubstrat eine Winkel aufweitende Funktion aufweist. Die Winkel aufweitende Eigenschaft des holographisch-optischen Auskoppelungssubstrats kann dabei durch verschiedene Maßnahmen hergestellt werden. Beispielsweise kann die Winkeldivergenz eines eingekoppelten, gerichteten Lichtstrahls und die Winkelakzeptanz des holographisch-optischen Auskoppelungssubstrats beim Schreiben des holographisch-optischen Auskoppelungssubstrats aneinander angepasst werden, derart, dass die Winkeldivergenz des einkoppelbaren gerichteten Lichtstrahls sich als Winkeldivergenz des abgebeugten Strahls abbildet. Alternativ oder zusätzlich kann das holographisch-optische Auskoppelungssubstrat eine eigene Diffusoreigenschaft aufweisen. Beispielsweise kann diese Diffusoreigenschaft durch das holographische Belichten mittels eines durch einen Diffusor erzeugten Signalstrahls hergestellt werden. Ferner kann alternativ oder zusätzlich das holographisch-optische Auskoppelungssubstrat aus einem gemultiplexten Aufbau gebildet sein, wobei der Aufbau aus Planwellen-Objektstrahl und Planwellen-Referenzstrahl gebildet ist. Das holographisch-optische Auskoppelungssubstrat kann alternativ oder zusätzlich aus einem wahlweise gemultiplexten Aufbau bestehend aus sphärischer Wellen-Objektstrahl und Planwellen-Referenzstrahl gebildet sein. Darüber hinaus kann das holographisch-optische Auskoppelungssubstrat alternativ oder zusätzlich aus einem wahlweise gemultiplexten Aufbau bestehend aus sphärischen Wellen-Objektstrahl und sphärischen Wellen-Referenzstrahl gebildet sein.

Für eine besonders hohe Farbtreue kann gemäß einer weiteren Ausführungsform der Beleuchtungsvorrichtung gemäß der Erfindung das holographisch-optische Auskoppelungssubstrat eine Mehrzahl von Einzelhologrammmodulen aufweisen. Ein Einzelhologrammmodul, auch Einzelhologramm genannt, kann dazu eingerichtet, eine bestimmte Primärfarbe zu beugen. Insbesondere ist ein Einzelhologrammmodul dazu eingerichtet, genau eine bestimmte Primärfarbe zu beugen. Die Einzelhologramme können jeweils speziell so ausgebildet sein, dass sie nur Strahlung einer der drei Primärfarben Rot, Grün und Blau beugen. Es versteht sich, dass auch mehr als drei Primärfarben verwendet werden können. Beispielsweise können vier Primärfarben (z.B. "Rot", "Grün", "Blau" und "Gelb") verwendet werden. Vorteilhafterweise ist es möglich, spezielle Farbanordnungen mit verschachtelten Farbpunkten holographisch darzustellen, wie z.B. das RGBG-Layout mit alternierenden roten und blauen Pixeln. Hierdurch kann der Farbempfindlichkeit des menschlichen Auges Rechnung getragen werden.

Das holographisch-optische Auskoppelungssubstrat kann vorzugsweise ein Aufzeichnungsmaterial für Volumenhologramme aufweisen. Gemäß einer Ausführungsform kann das holographisch-optische Auskoppelungssubstrat aus holographischen Silberhalogenidemulsionen, Dichromatgelatine, photorefraktive Materialien, photochrome Materialien oder Photopolymere, bevorzugt aus Photopolymeren enthaltend ein Photoinitiatorsystem und polymerisierbare Schreibmonomere, besonders bevorzugt Photopolymere enthaltend ein Photoinitiatorsystem, polymerisierbare Schreibmonomere und vernetzte Matrixpolymere, ganz besonders bevorzugt aus Photopolymere enthaltend ein Photoinitiatorsystem, ein polymerisierbares Schreibmonomer, eine vernetzte Matrix und ein Urethan, das mit mindestens einem Fluor-Atom substituiert ist, gebildet sein.

Geeignete Aufzeichnungsmaterial sind beispielsweise Silberhalogenidemulsionen, Dichromatgelatine, photorefraktive Materialien, photochrome Materialien oder Photopolymere. Bevorzugt sind im Wesentlichen Silberhalogenidemulsionen und Photopolymere. In Silberhalogenidemulsion lassen sich sehr helle und kontrastreiche Hologramme schreiben, allerdings ist ein erhöhter Aufwand für den Schutz der feuchtigkeits-empfindlichen Filme notwendig, um eine ausreichende Langzeitstabilität zu gewährleisten. Für Photopolymere gibt es mehrere grundlegende Material-Konzepte, allen Photopolymeren gemeinsam ist das Photoinitiatorsystem und polymerisierbare Schreibmonomere. Darüber hinaus können diese Bestandteile in Trägermaterialien wie zum Beispiel thermoplastische Binder, vernetzte oder nicht-vernetzte Binder, Flüssigkristalle, Sol-Gele oder nanoporöse Gläser eingebettet sein. Zusätzlich können weitere Eigenschaften gezielt durch spezielle Additive maßgeschneidert eingestellt werden. In einer besonderen Ausführungsform kann ein Photopolymer noch Weichmacher, Stabilisatoren und/oder weitere Additive enthalten. Dies ist insbesondere im Zusammenhang mit Photopolymeren enthaltend vernetzte Matrixpolymere, wie sie beispielhaft in EP2172505A1 beschrieben sind, von Vorteil. Die hierin beschriebenen Photopolymere weisen als Photoinitiator ein auf die notwendige Wellenlänge modular adjustierbares Photoinitiator-System, Schreibmonomere mit aktinisch polymerisierbaren Gruppen und ein hochvernetztes Matrix-Polymer auf. Werden geeignete Additive, ausgewählt wie in WO 2011/054796 beschrieben, hinzugefügt, lassen sich besonders vorteilhafte Materialien herstellen, die hinsichtlich ihrer optischen Eigenschaften, Herstellbarkeit und Verarbeitbarkeit ein industriell interessantes Material ergeben. Geeignete Additive nach diesem Verfahren sind insbesondere Urethane, die bevorzugt mit mindestens einem Fluor-Atom substituiert sind. Diese Materialien sind hinsichtlich ihrer mechanischen Eigenschaften über breite Bereiche einzustellen und können dadurch sowohl im unbelichteten wie belichteten Zustand auf vielerlei Anforderungen angepasst werden (WO 2011054749 A1). Die beschriebenen Photo-polymere lassen sich sowohl in Rolle-zu-Rolle-Verfahren (WO 2010091795) oder in Druck-Verfahren (EP 2218742) herstellen.

Gemäß einer weiteren Ausführungsform kann die Schichtdicke des Lichtleitersubstrats zwischen 30 μm und 10 mm, bevorzugt zwischen 100 μm und 2 mm, und besonders bevorzugt zwischen 300 μm und 1 mm liegen. Neben einer Reduzierung der Gesamtschichtdicke der Beleuchtungsvorrichtung ist bei einer reduzierten Schichtdicke des Lichtleitersubstrats von insbesondere unter 1 mm von Vorteil, dass die Anzahl der Durchgänge eines eingekoppelten gerichteten Lichtstrahls durch das holographisch-optische Auskoppelungssubstrat erhöht werden kann. Selbige liegen zugleich näher beieinander. Mit anderen Worten kann der Abstand zwischen zwei unmittelbar benachbarten Auskoppelungsbereichen verringert werden. Dadurch kann eine verbesserte Überlappung der abgebeugten Lichtstrahlen in dem Diffusormodul erreicht werden.

Um die Homogenität des auf die Lichtmodulatoreinrichtung auftreffenden Lichts noch weiter zu verbessern, wird gemäß einer bevorzugten Ausführungsform der erfindungsgemäßen Beleuchtungsvorrichtung vorgeschlagen, dass die Schichtdicke des Lichtleitersubstrats derart gebildet sein kann, dass die Schichtdicke des Lichtleitersubstrats im Wesentlichen der Strahlbreite eines in das Lichtleitersubstrat eingekoppelten, gerichteten Lichtstrahls entspricht.

Auch kann eine verbesserte Homogenität erzielt werden, wenn gemäß einer weiteren Ausführungsform das holographisch-optische Auskoppelungssubstrat eine Winkeldivergenz zwischen 1° und 120°, bevorzugt zwischen 5° und 60° und besonders bevorzugt zwischen 10° und 45° aufweist. Die Winkeldivergenz ist hierbei definiert als der Aufweitungswinkel zwischen den äußeren Strahlanteilen, in denen 50% der maximalen Lichtintensität radial gemessen wird.

Gemäß der erfindungsgemäßen Beleuchtungsvorrichtung ist das holographisch-optische Auskoppelungssubstrat ein Reflektions- oder Transmissionvolumenhologramm, vorzugsweise ein mit der Edge-Lit Geometrie aufgezeichnetes Reflektions- oder Transmissionvolumenhologramm. Die Aufgabe wird gemäß einem weiteren Aspekt der Erfindung bei einem Beleuchtungssystem gemäß dem Patentanspruch 8 gelöst. Das Beleuchtungssystem umfasst mindestens eine zuvor beschriebene Beleuchtungsvorrichtung und mindestens eine Lichterzeugungseinrichtung zum Einkoppeln von mindestens einem gerichteten Lichtstrahl in das Lichtleitersubstrat. Die mindestens eine Lichterzeugungseinrichtung kann beispielsweise eine Laserstrahlerzeugungseinrichtung, wie eine Laserdiode, sein. Die Lichterzeugungseinrichtung kann insbesondere an einer Kante des Lichtleitersubstrats angeordnet sein, um den Lichtstrahl an dieser Kante in das Lichtleitersubstrat einzustrahlen.

Das erfindungsgemäße Beleuchtungssystem erzeugt insbesondere ein flächig homogenes Licht in einer kompakten Beleuchtungsvorrichtung mit effizienter Nutzung des gerichtet eingestrahlten Lichts, wie Laserlicht, bei einer geringen Anzahl an einzelnen Lichterzeugungseinrichtungen dadurch, dass das holographisch-optische Auskoppelungssubstrat insbesondere in Kombination mit dem mindestens einen Diffusormodul den mindestens einen eingestrahlten und gerichteten Lichtstrahl in eine Vielzahl von Teilstrahlen, die in Richtung des Lichtmodulators gebeugt werden, zu gleichen Intensitäten verteilt und diese Teilstrahlen derart ausrichtet, dass die Teilstrahlen mit homogener Intensität und mit homogener Winkelverteilung einen Pixel basierten räumlichen Lichtmodulator erreichen und es bei der Flüssigkristallanzeige zu keiner visuell sichtbaren Inhomogenität in der lateralen Lichtverteilung kommt.

Gemäß einer ersten Ausführungsform des erfindungsgemäßen Beleuchtungssystems kann die Lichterzeugungseinrichtung derart angeordnet sein, dass der gerichtete Lichtstrahl bezogen auf die Flächennormale des Lichtleitersubstrats einen Einkoppelwinkel zwischen dem Winkel der Totalreflexion arcsin (1/ni) und 85°, bevorzugt 75°, besonders bevorzugt 65°, ganz besonders bevorzugt 55° einschließt, wobei $n_1$ der Brechungsindex des Lichtleitersubstrats ist. Hierdurch kann in einfacher Weise eine deutlichere Überlappung der ausgekoppelten Lichtstrahlen erzielt werden.

Darüber hinaus kann in einer weiteren Ausführungsform des Beleuchtungssystems gemäß der Erfindung vorgesehen sein, dass die Lichterzeugungseinrichtung derart eingerichtet ist, dass die geometrische Strahlbreite des gerichteten Lichtstrahls zwischen 0,05 mm und 1 cm, bevorzugt 0,1 mm und 4 mm und besonders bevorzugt zwischen 0,3 mm und 2 mm liegt.

Gemäß einer weiteren Ausführungsform kann das holographisch-optischen Auskoppelungssubstrat monochromatisch geschrieben sein, wenn die Schichtdicke des holographisch optischen Auskoppelungssubstrat zumindest kleiner als 1 μm ist oder wenn die Schichtdicke des holographisch optischen Auskoppelungssubstrat zumindest kleiner als 3 μm ist und der Einkoppelwinkel zwischen dem gerichteten Lichtstrahl und der Flächennormalen zwischen dem Winkel der Totalreflexion arcsin (1/nl) und 65°, vorzugsweise zwischen dem Winkel der Totalreflexion arcsin (1/nl) und 55° liegt. Alternativ kann das holographisch-optischen Auskoppelungssubstrat mit mindestens drei vorzugsweise roten, grünen und blauen, Lasern geschrieben sein, wenn die Schichtdicke des holographisch optischen Auskoppelungssubstrat zumindest über 5 μm liegt oder die Schichtdicke des holographisch optischen Auskoppelungssubstrat zumindest über 3 μm liegt und der Einkoppelwinkel zwischen dem gerichteten Lichtstrahl und der Flächennormalen zwischen dem Winkel der Totalreflexion arcsin (1/nl) und über 65° liegt.

Wie bereits beschrieben wurde, kann zur Einkopplung von mehrerer gerichteten Lichtstrahlen an der Kante des insbesondere flächig gebildeten Lichtleitersubstrats eine entsprechende Anzahl an Lichterzeugungseinrichtung, wie Laserdioden, vorgesehen sein. Um den Energieverbrauch des Beleuchtungssystems weiter zu verringern, kann gemäß einer besonders bevorzugten Ausführungsform vorgesehen sein, dass an mindestens einer Kante des Lichtleitersubstrats ein weiteres Lichtleitersubstrat angeordnet ist. Das weitere Lichtleitersubstrat kann mit mindestens einem weiteren holographisch-optischen Auskoppelungssubstrat umfassend eine Mehrzahl von Auskoppelungsbereichen zumindest in optischen Kontakt stehen. Die mindestens eine Lichterzeugungseinrichtung kann zum Einkoppeln von mindestens einem gerichteten Lichtstrahl in das weitere Lichtleitersubstrat vorgesehen sein. Vorzugsweise kann genau eine Lichterzeugungseinrichtung vorgesehen sein. Ein Auskoppelungsbereich kann dazu eingerichtet sein, einen Teil des gerichteten Lichtstrahls in Form von mindestens einem gerichteten Teilstrahl in Richtung der Kante des Lichtleitersubstrats auszukoppeln und dort einzustrahlen. Vorzugsweise kann das weitere holographisch-optische Auskoppelungssubstrat aus einem zuvor beschriebenen Material gebildet sein.

Das weitere Lichtleitersubstrat kann im Wesentlichen dem zuvor beschriebenen Lichtleitersubstrat entsprechen. Das in optischen Kontakt mit dem weiteren Lichtleitersubstrat stehende weitere holographisch-optische Auskoppelungssubstrat kann eingerichtet sein, gerichtetes Licht aus dem weiteren Lichtleitersubstrat aus- und insbesondere in das andere Lichtleitersubstrat einzukoppeln. Die Anzahl an erforderlichen Lichterzeugungseinrichtungen kann signifikant verringert werden. Insbesondere kann eine einzige Lichterzeugungseinrichtung zusammen mit dem weiteren Lichtleitersubstrat und dem weiteren holographisch-optischen Auskoppelungssubstrat eingerichtet sein, zwei oder mehr gerichtete Lichtstrahlen in das erste Lichtleitersubstrat einzustrahlen. In entsprechender Weise kann der Energieverbrauch reduziert werden.

Gemäß einer weiteren Ausführungsform des Beleuchtungssystems kann die Lichterzeugungseinrichtung eingerichtet sein, Licht im Wesentlichen monochromatisch im Bereich von 420 bis 485 nm, bevorzugt im Bereich von 430 bis 480 nm und besonders bevorzugt im Bereich von 440 bis 465 nm zu emittieren. Die Beleuchtungsvorrichtung kann das emittierte Licht zu einer Lichtmodulatoreinrichtung umlenken. Die Beleuchtungsvorrichtung kann eine konvertierende Quantendots aufweisende Schicht aufweisen, wobei die Quantendots vorzugsweise von blau nach grün und/oder von blau nach rot konvertierende Quantendots sind.

Ein noch weiterer Aspekt der Erfindung ist eine Flüssigkristallanzeige umfassend ein zuvor beschriebenes Beleuchtungssystem. Die erfindungsgemäße Flüssigkristallanzeige kann als elektronisches Display mit besonders vorteilhaftem Farbraum und in einem kompakten, insbesondere flachen Design eingesetzt werden. Wenn auf eine optionale im rückwärtigen Displaygehäuse angeordnete rückwärtige Verspiegelung verzichtet wird, eignet sich diese Flüssigkristallanzeige insbesondere auch als transparentes Display mit vielfältigen Anwendungen in Point-of-Sale Displays, Werbeanwendungen in Schaufenstern, in durchsichtigen Informationstafeln auf Flughäfen, Bahnhöfen und anderen öffentlichen Plätzen, in Automobilanwendungen z. B. im Dachhimmel und als Informationsdisplays im und auf dem Armaturenbrett und der Fronscheibe, in Fensterglasscheiben, in Verkaufs-Kühlschränken mit durchsichtigen Türen, ggf. auch als gebogenes Display. Weiterhin eignen sich diese Flüssigkristallanzeige besonders für die Verwendung in Mobiltelefonen, Smartphones, Tablet-PCs.

Es gibt nun eine Vielzahl von Möglichkeiten, die erfindungsgemäße Beleuchtungsvorrichtung, das erfindungsgemäße Beleuchtungssystem und die erfindungsgemäße Flüssigkristallanzeige auszugestalten und weiterzuentwickeln. Hierzu sei einerseits verwiesen auf die den unabhängigen

Patentansprüchen nachgeordneten Patentansprüche, andererseits auf die Beschreibung von Ausführungsbeispielen in Verbindung mit der Zeichnung. In der Zeichnung zeigt:

Fig. 1        eine schematische Ansicht eines ersten Ausführungsbeispiels eines Beleuchtungssystems gemäß der vorliegenden Erfindung,

Fig. 2a       eine schematische Ansicht eines ersten Ausführungsbeispiels einer Beleuchtungsvorrichtung gemäß der vorliegenden Erfindung,

Fig. 2b       eine schematische Ansicht eines weiteren Ausführungsbeispiels einer Beleuchtungsvorrichtung gemäß der vorliegenden Erfindung,

Fig. 3        eine schematische Ansicht zur Darstellung der Abbeugung eines gerichteten Lichtstrahls in einem Lichtleitersubstrat mit einem holographisch-optischen Auskoppelungssubstrat,

Fig. 4        eine schematische Ansicht eines weiteren Ausführungsbeispiels einer Beleuchtungsvorrichtung gemäß der vorliegenden Erfindung,

Fig. 5        eine schematische Ansicht eines weiteren Ausführungsbeispiels einer Beleuchtungsvorrichtung gemäß der vorliegenden Erfindung,

Fig. 6        eine schematische Ansicht eines weiteren Ausführungsbeispiels einer Beleuchtungsvorrichtung gemäß der vorliegenden Erfindung,

Fig. 7        eine schematische Ansicht eines weiteren Ausführungsbeispiels einer Beleuchtungsvorrichtung gemäß der vorliegenden Erfindung,

Fig. 8a       eine schematische Ansicht eines weiteren Ausführungsbeispiels eines Beleuchtungssystems gemäß der vorliegenden Erfindung,

Fig. 8b    eine schematische Ansicht eines weiteren Ausführungsbeispiels eines Beleuchtungssystems gemäß der vorliegenden Erfindung,

Fig. 9    eine schematische Ansicht eines weiteren Ausführungsbeispiels einer Beleuchtungsvorrichtung gemäß der vorliegenden Erfindung,

Fig. 10    eine schematische Ansicht zur Darstellung einer Winkeldivergenz eines gerichteten Lichtstrahls in einem Lichtleitersubstrat und einer Winkelakzeptanz des holographisch-optischen Auskoppelungssubstrats,

Fig. 11    eine schematische Ansicht eines weiteren Ausführungsbeispiels einer Beleuchtungsvorrichtung gemäß der vorliegenden Erfindung,

Fig. 12    eine schematische Ansicht eines weiteren Ausführungsbeispiels eines Beleuchtungssystems gemäß der vorliegenden Erfindung,

Fig. 13    eine schematische Ansicht eines weiteren Ausführungsbeispiels eines Beleuchtungssystems gemäß der vorliegenden Erfindung,

Fig. 14    eine schematische Ansicht eines weiteren Ausführungsbeispiels eines Beleuchtungssystems gemäß der vorliegenden Erfindung,

Fig. 15a-c    eine schematische Ansicht eines Simulationsergebnisses nach Kogelnik mit Winkelakzeptanz als Funktion der Änderung des Einkoppelwinkels um einen Winkel $\Theta$ (Fig. 15a), Winkelakzeptanz um den Winkel $\varphi$ (Fig. 15b) und Wellenlängenakzeptanz in $\mu$m (Fig. 15c) bei einem Lichtleitersubstrat mit einer Schichtdicke von 5 $\mu$m und Einkoppelwinkel von 45° sowie Beugungseffizienz bei einer Indexmodulation von 0,04,

Fig. 16a-c    eine schematische Ansicht eines Simulationsergebnisses nach Kogelnik mit Winkelakzeptanz als Funktion der Änderung des Einkoppelwinkels um einen Winkel $\Theta$ (Fig. 16a), Winkelakzeptanz um den Winkel $\varphi$ (Fig. 16b) und Wellenlängenakzeptanz in $\mu$m (Fig. 16c) bei einem Lichtleitersubstrat mit einer von 3 $\mu$m und Einkoppelwinkel von 45° sowie einer Beugungseffizienz bei einer Indexmodulation von 0,04,

Fig. 17a-c    eine schematische Ansicht eines Simulationsergebnisses nach Kogelnik mit Winkelakzeptanz als Funktion der Änderung des Einkoppelwinkels um einen Winkel $\Theta$ (Fig. 17a), Winkelakzeptanz um den Winkel $\varphi$ (Fig. 17b) und Wellenlängenakzeptanz in $\mu$m (Fig. 17c) bei einem Lichtleitersubstrat mit einer von 3 $\mu$m und Einkoppelwinkel von 85° sowie einer Beugungseffizienz bei einer Indexmodulation von 0,022,

Fig. 18a-c    eine schematische Ansicht eines Simulationsergebnisses nach Kogelnik mit Winkelakzeptanz als Funktion der Änderung des Einkoppelwinkels um einen Winkel $\Theta$ (Fig. 18a), Winkelakzeptanz um den Winkel $\varphi$ (Fig. 18b) und Wellenlängenakzeptanz in $\mu$m (Fig. 18c) bei einem Lichtleitersubstrat mit einer von 1 $\mu$m und Einkoppelwinkel von 85° sowie einer Beugungseffizienz bei einer Indexmodulation von 0,04, und

Fig. 19a-c    eine schematische Ansicht eines Simulationsergebnisses nach Kogelnik mit Winkelakzeptanz als Funktion der Änderung des Einkoppelwinkels um einen Winkel $\Theta$ (Fig. 19a), Winkelakzeptanz um den Winkel $\varphi$ (Fig. 19b) und Wellenlängenakzeptanz in $\mu$m (Fig. 19c) bei einem Lichtleitersubstrat mit einer von 1 $\mu$m und einem Einkoppelwinkel von 85° sowie einer Beugungseffizienz bei einer Indexmodulation von 0,065.

Nachfolgend werden gleiche Bezugzeichen für gleiche Elemente verwendet.

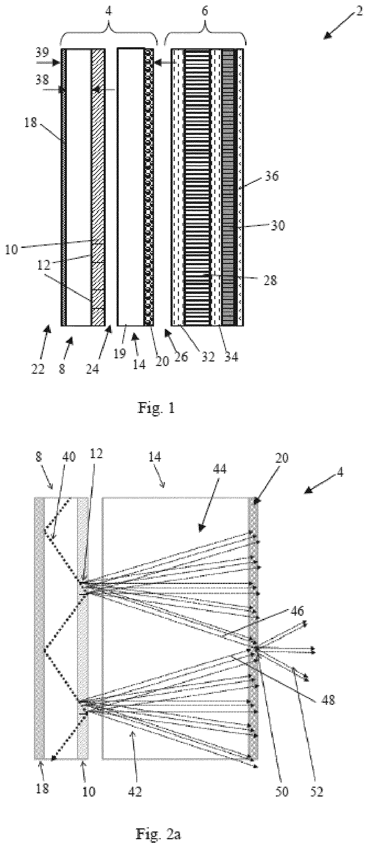

Figur 1 zeigt eine schematische Ansicht eines ersten Ausführungsbeispiels eines Beleuchtungssystems 2 gemäß der vorliegenden Erfindung. Das Beleuchtungssystem 2 umfasst eine Beleuchtungsvorrichtung 4 und eine Lichtmodulatoreinrichtung 6.

Die lichtdurchlässige und räumliche Lichtmodulatoreinrichtung 6 umfasst im vorliegenden Ausführungsbeispiel neben einem Lichtmodulator 28, ein erstes und ein weiteres Polarisatorsubstrat 32, 34, ein Farbfiltersubstrat 30 und eine Frontplatte 36.

Der Lichtmodulator 28 mit elektronisch ansteuerbarer Pixelstruktur kann ein Flüssigkristallpanel 28 sein, wie ein Flüssigkristallmodul. Wie der Figur 1 zu entnehmen ist, ist das Farbfiltersubstrat 30 vorliegend zwischen dem Polarisationsfilter 34 und der Frontplatte 36 positioniert. Es versteht sich dass gemäß anderen Varianten der Erfindung auch andere Positionen im Aufbau einer lichtdurchlässigen Lichtmodulatoreinrichtung 6 möglich sind. Insbesondere ist eine weitere Integrationen der einzelnen Schichten ineinander denkbar.

Die optionale Frontplatte 36 kann aus Kunststoff oder Glas hergestellt sein. Die Frontplatte 36 kann glatt und/oder aufgerauht sein. Die Frontplatte 36 kann ein Diffusormodul aufweisen und/oder eine Antireflexschicht umfassen.

Das Flüssigkristallmodul 28 kann in verschiedener Form gebildet sein. Insbesondere können Flüssigkristallschaltsysteme verwendet werden, die bestimmte, vorteilhafte effiziente Lichtabschattungen bei unterschiedlichen Strahlgeometrien und/oder Schaltgeschwindigkeiten erreichen können. Vorzugsweise können Twisted Nematic (TN), Super Twisted Nematic (STN), Double Super Twisted Nematic (DSTN), Triple Super Twisted Nematic (TSTN, Film-TN), Vertical Alignment (PVA, MVA), In-Plane-Switching (IPS), S-IPS (Super IPS), AS-IPS (Advanced Super IPS), A-TW-IPS (Advanced True White IPS), H-IPS (Horizontal IPS), E-IPS (Enhanced IPS), AH-IPS (Advanced High Performance IPS) und ferroelektrische Pixel basierte Lichtmodulatoren als Lichtmodulator 28 eingesetzt werden.

Die Beleuchtungsvorrichtung 4 umfasst im vorliegenden Ausführungsbeispiel ein räumliches Lichtleitersubstrat 8, ein holographisch-optisches Auskoppelungssubstrat 10 und ein separates Diffusorsubstrat 14. Das Lichtleitersubstrat 8 ist dazu eingerichtet, einen gerichteten Lichtstrahl durch Totalreflexion an den Grenzflächen des Lichtleitersubstrats 8 bzw. des holographisch-optischen Auskoppelungssubstrats 10 zu leiten.

Lichtleitersubstrat 8 und holographisch-optisches Auskoppelungssubstrat 10 stehen in einem optischen Kontakt zueinander. Insbesondere umfasst das Lichtleitersubstrat 8 das holographisch-optische Auskoppelungssubstrat 10.

Der optische Kontakt zwischen dem Lichtleitersubstrat 8 und dem holographisch-optischen Auskoppelungssubstrat 10 kann durch direkte Lamination des holographisch-optischen Auskoppelungssubstrats 10 auf das Lichtleitersubstrat 8 erreicht werden. Alternativ kann der optische Kontakt durch eine Flüssigkeit oder einem Klebstoff, wie ein Flüssigklebstoff oder Transferklebstofffilm, hergestellt sein.

Für eine bessere Totalreflexion kann die von dem Lichtmodulator 28 abgewandte Seite des Lichtleitersubstrats 8 eine optionale Reflexionsschicht 18 bzw. Spiegelschicht 18 aufweisen. Eine Reflexionsschicht 18 kann beispielsweise durch ein Metallisierungsverfahren, z.B. Auflamination von Metallfolie, Metallabscheidungsverfahren im Vakuum, Auftragen einer Dispersion aus metallhaltigen Kolloiden mit anschließendem Sintern oder durch Auftragen einer Metall-Ionen enthaltenden Lösung mit anschließendem Reduktionsschritt, hergestellt werden. Alternativ oder zusätzlich ist es möglich durch eine Beschichtung mit speziell niedrigerem Brechungsindex die Wellenleitereigenschaften des Lichtleitersubstrats 8 zu verbessern. Weiterhin ist es möglich Mehrschichtenaufbauten zu verwenden, die alternierende Brechungsindizes und Schichtdicken haben. Derartige Mehrschichtaufbauten mit Reflexionseigenschaften können organische oder anorganische Schichten umfassen, deren Schichtdicken in derselben Größenordnung, wie die zu reflektierende(n) Wellenlänge(n) liegen. Wie aus Figur 1 zu erkennen ist, steht die Reflexionsschicht 18 in optischem Kontakt zum Lichtleitersubstrat 8.

Das holographisch-optische Auskoppelungssubstrat 10 ist vorliegend aus einem Aufzeichnungsmaterial für Volumenhologramme gebildet. Typische Materialien sind holographische Silberhalogenidemulsionen, Dichromatgelatinen oder Photopolymere. Photopolymere umfassen zumindest Photoinitiatorsystemen und polymerisierbaren Schreibmonomeren. Spezielle Photopolymere können zusätzlich noch Weichmacher, thermoplastische Binder und/oder vernetzte Matrixpolymere aufweisen. Es können Photopolymere umfassend vernetzte Matrixpolymere eingesetzt werden. Bei einer erfindungsgemäßen Beleuchtungsvorrichtung 4 können besonders bevorzugt Photopolymere aus einem Photoinitiatorsystem, einem oder mehreren Schreibmonomeren, Weichmachern und vernetzten Matrixpolymeren eingesetzt werden.

Das holographisch-optische Auskoppelungssubstrat 10 kann zudem mehrere Schichten aufweisen. Beispielsweise kann ein holographisch-optisches Auskoppelungssubstrat 10 ein optisch transparentes Substrat und ein Photopolymer umfassen. Bei einem entsprechenden Design ist es besonders bevorzugt, wenn das Photopolymer direkt auf dem Lichtleitersubstrat 8 laminiert wird.

Auch kann das holographisch-optische Auskoppelungssubstrat 10 derart gebildet sein, dass das Photopolymer von zwei thermoplastischen Filmen eingeschlossen ist. In diesem Fall ist es besonders vorteilhaft, dass einer der beiden an das Photopolymer angrenzenden thermoplastischen Filme mittels eines optisch klaren Klebstofffilms mit dem Lichtleitersubstrat 8 verbunden ist.

Die thermoplastischen Filmschichten des holographisch-optischen Auskoppelungssubstrats 10 können aus transparenten Kunststoffen gebildet sein. Bevorzugt können im Wesentlichen doppelbrechungsfreie Materialien, wie amorphe Thermoplaste, verwendet werden. Beispielhafte und nicht abschließende Materialien sind Polymethylmethacrylat, Cellulosetriacetat, amorphe Polyamide, Polycarbonat und Cycloolefine (COC). Bevorzugt können die thermoplastischen Filmschichten optisch klare, nicht streuende Thermoplaste sein. Insbesondere können doppelbrechungsfreie, nicht streuende Thermoplastfolien, eingesetzt werden.

Beispielhaft sind im vorliegenden Ausführungsbeispiel zwei unmittelbar benachbarte Auskoppelungsbereiche 12 dargestellt. Es versteht sich, dass eine Vielzahl an Auskoppelungsbereiche 12 vorgesehen sein können und diese insbesondere von dem eingekoppelten gerichteten Lichtstrahl abhängen können.

Das Lichtleitersubstrat 8 weist eine Schichtdicke 38 auf. Die Schichtdicke 38 liegt vorliegend zwischen 30 μm und 10 mm, bevorzugt zwischen 100 μm und 2 mm und besonders bevorzugt zwischen 300 μm und 1 mm. Ferner weist die Beleuchtungsvorrichtung 4 eine Schichtdicke 39 auf, welche aufgrund des separaten Diffusorsubstrats 14 und des holographisch-optischen Auskoppelungssubstrats 10 größer als die Schichtdicke 38 ist.

Das Diffusorsubstrat 14 kann vorliegend aus einem transparentem Substrat 19 und einer diffus streuenden Schicht 20 gebildet sein. Die diffus streuende Schicht 20 kann ein Volumenstreuer sein. Die diffus streuende Schicht 20 kann z.B. organische oder anorganische Streupartikel umfassen, die in eine Trägerschicht eingebettet sein können. Die Streupartikel und die Trägerschicht weisen unterschiedliche Brechungsindizes auf. In einer bevorzugten Ausführungsform sind die Streupartikel optisch nicht absorbierend und kugelähnlich geformt.

Vorliegend ist zwischen dem holographisch-optischen Auskoppelungssubstrat 10 und dem Diffusorsubstrat 14 eine Zwischenschicht 24, insbesondere ein Luftspalt 24, angeordnet. Der Brechungsindex der Zwischenschicht 24 ist zumindest geringer als der Brechungsindex der angrenzenden Schicht. Gemäß anderer Varianten der Erfindung kann zwischen dem holographisch-optischen Auskoppelungssubstrat 10 und dem Diffusorsubstrat 14 auch eine niedrigbrechende Klebstoffschicht, eine niedrigbrechende Kontaktflüssigkeit, eine niedrigbrechende Oberflächenmodifikation des Diffusorsubstrats 14, oder eine niedrigbrechende Oberflächenmodifikation Lichtleitersubstrats 8 oder des holographisch-optischen Auskoppelungssubstrats 10 angeordnet sein. Es versteht sich, dass verschiedene Schichten miteinander kombiniert sein können.

Ferner sind weitere Schichten 22 und 26 vorgesehen. Diese können entsprechend der Zwischenschicht 24 gebildet sein. Insbesondere kann der Brechungsindex der Zwischenschicht 22, 26 zumindest geringer als der Brechungsindex der jeweils angrenzenden Schicht/en sein. Vorliegend ist jeweils ein Luftspalt 22, 26 vorgesehen. Das erfindungsgemäße Ausführungsbeispiel stellt sicher, dass das ausgekoppelte Licht mit einer hinreichenden Homogenität auf den Lichtmodulator 28 trifft, wie nachfolgend ausgeführt wird.

Figur 2a zeigt eine schematische Ansicht eines ersten Ausführungsbeispiels einer Beleuchtungsvorrichtung 4 gemäß der vorliegenden Erfindung. Insbesondere ist in Figur 2a ein Ausschnitt aus dem Beleuchtungssystem 2 aus Figur 1 gezeigt.

Der von einer (nicht dargestellten) Lichterzeugungseinrichtung, wie einer Laserlichtquelle, eingestrahlte, gerichtete Lichtstrahl 40 folgt dabei der Totalreflexion und propagiert im Lichtleitersubstrat 8. Als Grenzfläche der Totalreflexion dienen die Grenzfläche zwischen dem Lichtleitersubstrat 8 und dem Luftspalt 24 bzw. der Reflexionsschicht 18. Wenn das holographisch-optische Auskoppelungssubstrat 10 weitere thermoplastische Schichten umfassen sollte, so findet die Totalreflexion dann an der Schicht statt, die den direkten Kontakt zum Luftspalt 24 aufweist.

Bei Durchtritt des gerichteten Lichtstrahls 40 durch das holographisch-optische Auskoppelungssubstrat 10 wird in dem jeweiligen Auskoppelungsbereich 12 partiell Lichtintensität abgebeugt. Ein Teil des Lichtstrahls 40 wird in Richtung des lichtdurchlässigen Pixel basierten Lichtmodulators 28 abgebeugt. Das vorliegende holographisch-optische Auskoppelungssubstrat 10 ist ferner dazu eingerichtet, einen Teil des Lichtstrahls 40 aufzuweiten.

Die abgebeugten Lichtstrahlen 42, 44 treffen auf die streuende Schicht 20, welches an dem separaten Diffusorsubstrat 14 positioniert ist. In der diffus streuenden Schicht 20werden die Lichtstrahlen 42, 44 diffus aufgeweitet. Zu erkennen ist, dass die äußeren Lichtstrahlen 46, 48 zweier benachbarter Auskoppelungsbereiche aneinander grenzen, so dass die abgestrahlte Lichtintensität des gesamten Diffusorsubstrats 14 bereits homogen ist. Die Beleuchtungsvorrichtung 4 in Figur 2a zeichnet sich dadurch aus, dass die divergenten Lichtstrahlen 42, 44 der einzelnen Lichtstrahldurchgänge des Lichtstrahls 40 durch das holographisch-optische Auskoppelungssubstrat 10 einander in dem Diffusorsubstrat 14, also vor dem Austritt aus dem Diffusorsubstrat 14, auf den Lichtmodulator 28, bereits überschneiden. Für eine bessere Übersicht sind nur wenige Lichtstrahlen 52 von einem Punkt 50 dargestellt. Es versteht sich, dass eine homogene Lichtintensität bei dem Ausführungsbeispiel gemäß Fig. 2a erzeugt wird.

Ferner ist das holographisch-optische Auskoppelungssubstrat 10 mit einer Winkel aufweitenden Eigenschaft versehen, welche durch verschiedene Maßnahmen realisiert werden kann. Beispielsweise kann die Winkeldivergenz des Laserstrahls 40 und die Winkelakzeptanz des holographisch-optischen Auskoppelungssubstrats 10 beim Schreiben des holographisch-optischen Auskoppelungssubstrats 10 einander angepasst werden, derart, dass die Winkeldivergenz des Laserstrahls 40 sich als Winkeldivergenz der Strahlen 42 und 44 abbildet. Das holographisch-optische Auskoppelungssubstrat 10 kann auch eine eigene Diffusoreigenschaft aufweisen oder aus einem gemultiplexten Aufbau bestehend aus Planwellen-Objektstrahl und Planwellen-Referenzstrahl gebildet sein. Darüber hinaus kann das holographisch-optische Auskoppelungssubstrat 10 aus einem wahlweise gemultiplexten Aufbau bestehend aus sphärischer Wellen-Objektstrahl und Planwellen-Referenzstrahl oder aus einem wahlweise gemultiplexten Aufbau bestehend aus sphärischen Wellen-Objektstrahl und sphärischen Wellen-Referenzstrahl gebildet sein. Es versteht sich, dass die zuvor beschriebenen Maßnahmen auch miteinander kombiniert werden können.

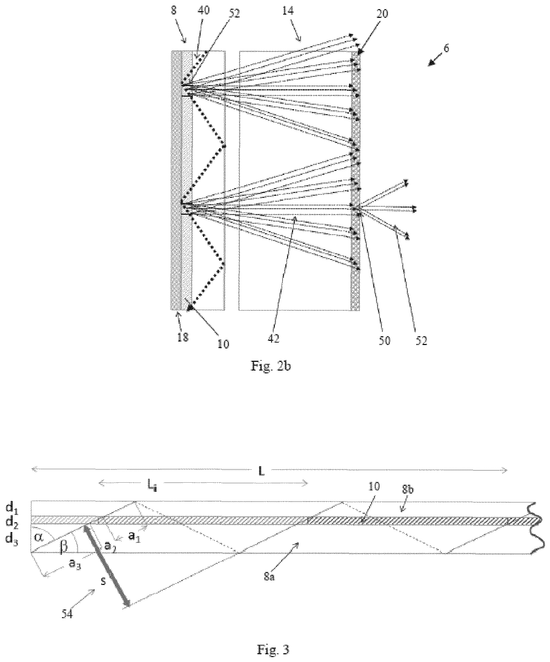

Das in Figur 2b dargestellte Ausführungsbeispiel der erfindungsgemäßen Beleuchtungsvorrichtung 4 unterscheidet sich von dem in Figur 2a dargestellten Ausführungsbeispiel dadurch, dass das holographisch-optische Auskoppelungssubstrat 10 an der anderen Oberflächeseite des Lichtleitersubstrats 8 angeordnet ist. Insbesondere grenzt in diesem Ausführungsbeispiel das holographisch-optische Auskoppelungssubstrat 10 an die optionale Reflexionsschicht 18.

Figur 3 zeigt eine schematische Ansicht zur Darstellung der Abbeugung eines gerichteten Lichtstrahls in einem Lichtleitersubstrat 8a, 8b mit einem holographisch-optischen Auskoppelungssubstrat 10. Insbesondere werden mit Hilfe der Figur 3 geometrische Abhängigkeiten des holographisch-optischen Auskoppelungssubstrats 10 und des Lichtleitersubstrats 8a, 8b aufgezeigt.

Das holographisch-optische Auskoppelungssubstrat 10 ist vorliegend von zwei thermoplastischen Schichten 8a und 8b geschützt, welche das Lichtleitersubstrat 8 darstellen. Beispielsweise kann die transparente Schicht 8a aus Figur 3 dem Lichtleitersubstrat 8 aus Figur 1 entsprechen. Es ist ebenfalls möglich auf eine der beiden Schichten 8a und 8b zu verzichten und nur das holographisch-optische Auskoppelungssubstrat 10 auf das Lichtleitersubstrat 8 zu positionieren.

Die Weglänge des Lichtstrahls durch das holographisch-optische Auskoppelungssubstrat 10 ergibt sich aus:

$$P_2 = 2 \cdot n \cdot a_2 = 2 \cdot n \cdot d_2 / \sin \beta, \tag{a}$$

wobei n die Anzahl der definierten Auskoppelungsbereiche des Lichtstrahls aus dem Verbund aus Lichtleitersubstrat 8 und holographisch-optischen Auskoppelungssubstrat 10 ist, $d_2$ die Schichtdicke des holographisch-optischen Auskoppelungssubstrat 10 ist, $a_2$ die Weglänge durch ein Element n des holographisch-optischen Auskoppelungssubstrat 10 ist und $\alpha$ der Einfallswinkel bzw. Einkoppelwinkel des Lasers im Medium bezogen auf die Flächennormale der Lichtleitersubstratkante ist.

Der Winkel $\beta$ ergibt sich daher unmittelbar aus der Beziehung

$$\beta = \alpha - 90° \tag{b}$$

Darüber hinaus ergibt sich die Weglänge des Lichtstrahls durch die thermoplastischen Schichten 8a, 8b aus folgender Formel:

$$P_{1+3} = 2 \cdot n \cdot (d_1 + d_3) / \sin \beta, \tag{c}$$

wobei $d_1 + d_3$ die Gesamtschichtdicke der thermoplastischen Schichten 8a, 8b ist und $\alpha$ der Einfallswinkel bzw. Einkoppelwinkel des Lasers im Medium bezogen auf die Flächennormale der Lichtleitersubstratkante ist. Der Winkel $\beta$ ergibt sich aus der Beziehung (b).

Die Gesamtlänge L des Lichtleitersubstrats ergibt sich demnach zu:

$$L = 2n \, (d_1 + d_2 + d_3) / \tan \beta. \tag{d}$$

Darüber hinaus kann die geometrische, theoretische Strahlbreite S durch folgende Formel bestimmt werden:

$$S = \cos (90° - 2\beta) \, (d_1 + d_2 + d_3) / \sin \beta. \tag{e}$$

Es ist jedoch erkannt worden, dass es in der Praxis unpraktisch und nicht kosteneffizient ist, die Strahlbreite der Lichterzeugungseinrichtung, wie einen Laser, präzise auf S einzustellen. Vielmehr eignet sich eine beliebig andere Strahlbreite ebenso. Verschiedene erfindungsgemäße Ausführungsformen sind derart gebildet, dass die effektive Laserapertur von 0,1 S bis 5,0 S eingestellt werden kann.

Die Laserapertur stellt den Durchmesser des in das Lichtleitersubstrat 8 effektiv eingestrahlten Lichtstrahls dar. Die Strahlintensität des Laserstrahls kann als Funktion der Laserapertur variiert werden. Vorzugsweise kann ein Gaußsches-Intensitätsprofil verwendet werden. Es versteht sich, dass auch andere Profile, z.B. durch andere transversale Moden des Lasers, denkbar sind.

Die effektive Laserapertur stellt vorzugsweise den weitesten Abstand zweier Bereiche des Laserstrahls dar, die mindestens 50% der maximalen Lichtintensität zeigen. Bei einen rein Gaußschen Lichtstrahlprofil entspricht dies dem "Full Width Half Maximum" (FWHM).

Grundsätzlich gibt es zwei effektive Laseraperturen in den beiden Dimensionen, die orthogonal zur Lichtausbreitungsrichtung definiert sind. Im Weiteren wird allerdings davon ausgegangen, dass beide Laseraperturen nahezu gleich groß sind, was im speziellen Anwendungsfall anders sein kann.

Des Weiteren kann die Laserapertur größer als S eingestellt werden, derart, dass der Überlapp eines Gaußförmigen Intensitätsprofils an der äußeren Seite derart überlappt, dass die effektive Intensität dort mindestens 30% der Maximalintensität beträgt. Ferner ist es möglich, die Laserapertur des Laserstrahls um ein Mehrfaches von S einzustellen, um eine besonders einfache Montage zu ermöglichen. Ebenfalls kann es vorteilhaft sein, die Laserapertur kleiner als S zu wählen, um eine besonders präzise konstante Intensitätsverteilung aller aufgeteilten Lichtstrahlen zu ermöglichen. Wie bereits beschrieben wurde, ist die Strahlbreite bevorzugt derart einzustellen, dass die effektive Laserapertur von 0,1 S bis 5,0 S eingestellt wird.

Die Anzahl der durch die Auskoppelung mittels des holographisch-optischen Auskoppelungssubstrats 10 erzeugten Lichtquellen entspricht der Anzahl n an Auskoppelungsbereichen. Die Anzahl wird durch die Gesamtlänge der Beleuchtungsvorrichtung 4, dem Einfallswinkel $\alpha$ des Lichtstrahls 40 in das Lichtleitersubstrat 8 und durch die Gesamtschichtdicke $(d_1+d_2+d_3)$ bestimmt. Es ergeben sich somit pro Meter Lichtleitersubstratslänge zwischen einigen zehn und einigen tausend Strahldurchgänge durch das holographisch-optische Auskoppelungssubstrat 10 mit einer entsprechenden Anzahl n an Auskoppelungsbereichen bzw. abgebeugten Leuchtzentren n.

Es versteht sich, dass bei einem in der Praxis eingesetzten räumlichen Lichtleitersubstrat aufgrund der Räumlichkeit ein Vielfaches von Lichtquellen erzeugt werden.

Die Beugungseffizienz des holographisch-optischen Auskoppelungssubstrats 10 kann sich (idealerweise) entlang des Lichtleitersubstrats ausgehend von der Einkoppelstelle von Auskoppelungsbereich zu Auskoppelungsbereich der gleichen Länge $L_i$ wie folgt vergrößern, um in jedem Subsegment die gleiche Lichtleistung I auszukoppeln:

$$I = DE_1 \cdot I_0, \tag{f}$$

wobei I die Intensität des gebeugten Lichtes ausgekoppelt im ersten Auskoppelungsbereich, $I_0$ die Anfangsintensität und DEi Beugungseffizienz des ersten Auskoppelungsbereichs ist.

$$I = DE_2 \cdot (I_0 - I) = DE_2 \cdot (I_0 - DE_1 \cdot I_0) = I_0 \cdot DE_2 \cdot (1 - DE_1) \tag{g}$$

$$DE_2 = DE_1 / (1 - 1 \cdot DE_1), \tag{h}$$

wobei $DE_2$ die Beugungseffizienz des zweiten Auskoppelungsbereichs ist.

$$I = DE_3 \cdot (I_0 - 2 \cdot I) = DE_3 \cdot (I_0 - 2 \cdot DE_1 \cdot I_0) = I_0 \cdot DE_3 \cdot (1 - 2 \cdot DE_1) \tag{i}$$

$$DE_3 = DE_1 / (1 - 2 \cdot DE_1), \tag{j}$$

wobei $DE_3$ die Beugungseffizienz des dritten Auskoppelungsbereichs ist, usw. Hieraus kann die folgende allgemeine Beziehung abgeleitet werden:

$$DE_n = DE_1 / (1 - (n-1) \cdot DE_1). \tag{k}$$

Da $DE_n$ maximal 1 werden kann, ergibt sich DEi zu maximal 1/n.

Verliert man durch Absorption und/oder Streuung pro Auskoppelungsbereich zusätzlich Intensität, etwa statt I den Anteil $\varepsilon \cdot I$ mit $\varepsilon \geq 1$, dann folgt für den i-ten Auskoppelungsbereich analog:

$$DE_i = DE_1 / (1 - (i-1) \cdot \varepsilon \cdot DE_1) \tag{l}$$

und

$$DE_n = DE_1 / (1 - (n-1) \cdot \varepsilon \cdot DE_1) \tag{m}$$

sowie

$$DE_1 \leq 1 / (\varepsilon \cdot n). \tag{n}$$

Alternativ zu einem einstückig gebildeten holographisch-optischen Auskoppelungssubstrat 10 kann das holographisch-optische Auskoppelungssubstrat aus einer Mehrzahl von miteinander verbundenen Einzelhologrammen aufgebaut sein. Die Einzelhologramme können insbesondere Volumenhologramme sein, die durch Zweistrahlinterferenz und angepasster Belichtung in ihrer Beugungseffizienz $DE_i$ geschrieben wurden. So gelingt eine Veränderung der Beugungseffizienz durch Änderung der Belichtungsdosis, beispielsweise durch eine Abschattung, durch Veränderung des Strahlintensitätsverhältnisses (beam ratio) oder durch adaptierte inkohärente Vorbelichtung zur Reduktion des dynamischen Bereichs des Aufzeichnungsmaterials.

Darüber hinaus kann ein Einzelhologramm derart gebildet sein, dass es nur Strahlung einer der drei Primärfarben Rot, Grün und Blau beugen kann. Es versteht sich, dass es auch möglich ist, mehr als drei Primärfarben zu verwenden, wie vier Primärfarben, z.B. "Rot", "Grün", "Blau" und "Gelb". Des Weiteren ist es möglich, spezielle Farbanordnungen mit verschachtelten Farbpunkten holographisch darzustellen, wie z.B. das RGBG-Layout mit alternierenden roten und blauen Pixeln, das insbesondere der Farbempfindlichkeit des Auges Rechnung trägt.

Die Verwendung von mehreren Einzelhologrammen, die nur bestimmte ausgewählte Laserwellenlängen beugen, kann insbesondere mit Photopolymer-Schichtdicken größer als 5 $\mu$m erzielt werden. Beispielsweise ist es möglich, drei Photopolymerschichtdicken von jeweils größer als 5 $\mu$m aufeinander zu laminieren und jeweils vorher getrennt zu beschreiben. Auch kann nur eine Photopolymerschicht größer als 5 $\mu$m genutzt werden, wenn in diese eine Photopolymerschicht sämtliche zumindest drei farbselektiven Hologramme gleichzeitig oder nacheinander oder teilweise zeitlich überlappend eingeschrieben werden. Alternativ zu den zuvor beschriebenen Optionen können auch Photopolymerschichten kleiner als 5 $\mu$m, vorzugsweise kleiner als 3 $\mu$m und besonders vorzugsweise kleiner als 3 $\mu$m und größer als 0,5 $\mu$m eingesetzt werden. Für diesen Fall wird nur ein Einzelhologramm, vorzugsweise mit einer Wellenlänge geschrieben, die Nahe der spektralen Mitte des sichtbaren elektromagnetischen Spektralbereiches oder Nahe des geometrischen Mittels der beiden Wellenlängen des langwelligsten Lasers und des kurzwelligsten Lasers des Beleuchtungssystems mit gerichtetem Laserlicht liegen.

Der Einstrahlwinkel des Schreiblaserstrahls im Medium bezogen auf die Flächennormale der Lichtleitersubstratkante kann für die oben angegebenen Photopolymerschichtdicken zwischen dem Winkel der Totalreflexion arcsin $(1/n_1)$, z.B. 41,8° bei einem Brechungsindex des Lichtleitersubstrat von $n_1 = 1{,}5$ bis 85° geeignet angepasst werden. Ebenfalls gilt es zu berücksichtigen, dass kostengünstige und hinreichend starke Lasereinrichtung zur Verfügung stehen. Bevorzugt sind frequenzverdoppelte $Nd{:}YVO_4$- Kristall-Laser mit 532 nm und Argon Ionenlaser mit 514 nm.

Die Herstellung von Volumenhologrammen kann z.B. durch Zweistrahlinterferenz erfolgen. Bei einem anderen Verfahren zur Massenvervielfältigung von Reflexions-Volumenhologrammen wird ein lichtempfindliches Material auf ein Masterhologramm positioniert und anschließend mittels kohärenten Lichts kopiert. Die Herstellung von Hologrammen kann mittels einer Rollenreplikation durchgeführt werden.

Insbesondere sei auch auf die Herstellung von Edge-lit Hologrammen hingewiesen, die spezielle Belichtungsgeometrien benötigen. In einem derartigen Verfahren wird auf Basis eines speziellen optischen Adapterblocks beschrieben.

Das in der erfindungsgemäßen Beleuchtungsvorrichtung 4 mit gerichtetem Laserlicht erzeugbare holographisch-optische Auskoppelungssubstrat 10 kann bevorzugt ein Edge-lit Hologramm sein. Grund hierfür ist, dass es mit steil einfallendem Licht in dem Lichtleitersubstrat arbeiten kann, das unter Totalreflexion in der Lichtwellenleiterplatte / Edge-lit Hologramm Kombination propagiert.

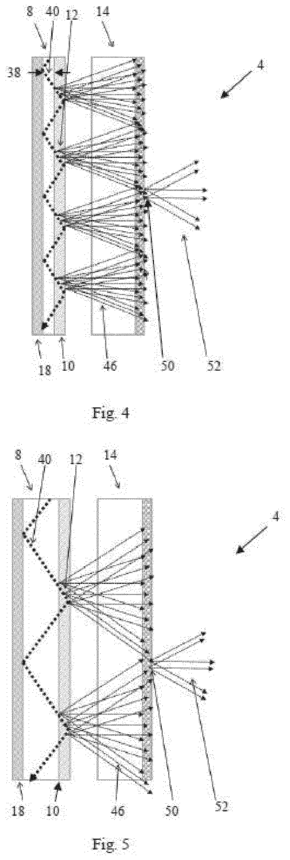

Figur 4 zeigt eine schematische Ansicht eines weiteren Ausführungsbeispiels einer Beleuchtungsvorrichtung 4 gemäß der vorliegenden Erfindung. Die Beleuchtungsvorrichtung 4 des vorliegenden Ausführungsbeispiels unterscheidet sich von den zuvor beschriebenen Ausführungsbeispielen insbesondere darin, dass die Schichtdicke 38 des Lichtleitersubstrats 8 reduziert ist. Insbesondere liegt die Schichtdicke 38 zwischen 100 $\mu$m und 2 mm, und besonders bevorzugt zwischen 300 $\mu$m und 1 mm. Durch eine entsprechend geringe Schichtdicke 38 kann die Anzahl der Durchgänge des Laserstrahls 40 durch das holographisch-optische Auskoppelungssubstrat 10 erhöht werden. In entsprechender Weise erhöht sich die Anzahl n der Auskoppelungsbereiche 12. Dies hat zur Folge, dass die abgebeugten Lichtstrahlen 46 bereits in der diffus wirkenden Schicht des Diffusorsubstrats 14 überlappen. Die Schichtdicke der Beleuchtungsvorrichtung 4 kann noch weiter verringert werden.

Die Figur 5 zeigt eine schematische Ansicht eines weiteren Ausführungsbeispiels einer Beleuchtungsvorrichtung 4 gemäß der vorliegenden Erfindung. Das Ausführungsbeispiel gemäß der Figur 5 unterscheidet sich von den vorherigen Ausführungsbeispielen insbesondere dadurch, dass das holographisch-optische Auskoppelungssubstrat 10 mit einer bestimmten Winkeldivergenz versehen wurde. Die Winkeldivergenz, welche als der Aufweitungswinkel zwischen den äußeren Strahlanteilen, in denen 50% des maximalen Lichtintensität radial gemessen wird, definiert ist, liegt vorliegend bevorzugt zwischen 5° und 60° und besonders bevorzugt zwischen 10° und 45°. Dies bringt eine deutliche Aufweitung der abgebeugten Lichtstrahlen 46 mit. Dies hat zur Folge, dass die abgebeugten Lichtstrahlen 46 bereits in der diffus wirkenden Schicht des Diffusorsubstrats 14 überlappen. Die Schichtdicke der Beleuchtungsvorrichtung 4 kann noch weiter verringert werden.

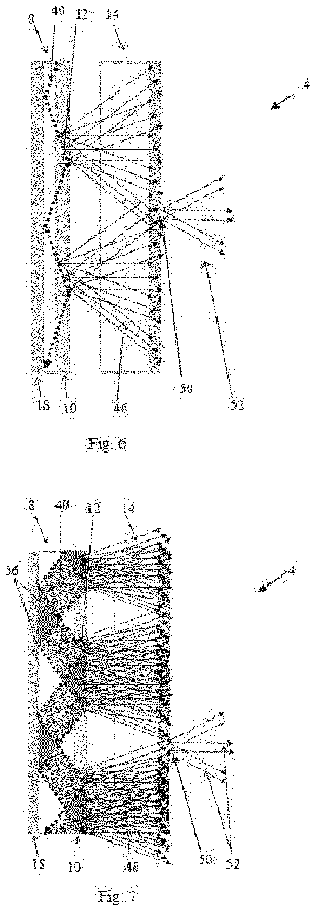

Die Figur 6 zeigt eine schematische Ansicht eines weiteren Ausführungsbeispiels einer Beleuchtungsvorrichtung 4 gemäß der vorliegenden Erfindung. Das Ausführungsbeispiel gemäß der Figur 6 unterscheidet sich von den vorherigen Ausführungsbeispielen insbesondere dadurch, dass das holographisch-optische Auskoppelungssubstrat 10 mit einer größeren Winkeldivergenz versehen wurde und der Einstrahlwinkel $\alpha$ des gerichteten Lichtstrahls 10 steiler eingestellt wurde. Der Einstrahlwinkel $\alpha$ des Laserstrahls 40 bezogen auf die Flächennormale des Lichtleitersubstrats 8 liegt vorliegend zwischen dem Winkel der Totalreflexion arcsin (1/ni) (z.B. 41,8° bei einem Brechungsindex des Lichtleiters von $n_1$=1,5) bis 75°, besonders bevorzugt bis 60°. Dies hat zur Folge, dass die abgebeugten Lichtstrahlen 46 bereits in der diffus wirkenden Schicht des Diffusorsubstrats 14 überlappen. Die Schichtdicke der Beleuchtungsvorrichtung 4 kann noch weiter verringert werden.

In Figur 7 ist eine weitere schematische Ansicht eines erfindungsgemäßen Ausführungsbeispiels gezeigt. In diesem Ausführungsbeispiel liegt die Strahlbreite 56 des gerichteten Lichtstrahls 40, insbesondere ein Laserstrahl 40, im Vergleich zu den vorherigen Ausführungsbeispielen in der Größenordnung der Schichtdicke des Lichtleitersubstrats 8. Die geometrische Strahlbreite S des eingestrahlten Laserstrahls 40 kann vorliegend beispielsweise zwischen 0,1 mm und 4 mm und besonders bevorzugt zwischen 0,3 mm und 2 mm liegen. Dies hat zur Folge, dass die abgebeugten Lichtstrahlen 46 bereits in der diffus wirkenden Schicht des Diffusorsubstrats 14 überlappen und die Anzahl n der Strahldurchgänge durch das holographisch-optische Elemente 10 klein gehalten werden kann. Die Schichtdicke der Beleuchtungsvorrichtung 4 kann noch weiter verringert werden.

Aus den vorherigen Ausführungsbeispielen wird deutlich, dass verschiedene Maßnahmen zur Optimierung der Beleuchtungsvorrichtung 4 beispielsweise hinsichtlich der Schichtdicke durchgeführt und miteinander kombiniert werden können. Insbesondere kann bei einer erfindungsgemäßen Beleuchtungsvorrichtung 4 die geometrischen Überlegungen aus Abstand von dem holographisch-optischen Auskoppelungssubstrat 10 bis zur Streuschicht 20 des Diffusorsubstrats 14 (siehe Figur 2), der Schichtdicke 38 des Lichtleitersubstrats 8 (siehe Figur 4), der Winkeldivergenz der Beugung des holographisch-optischen Auskoppelungssubstrats 10 (siehe Figur 5), des Einstrahlwinkels des gerichteten Lichtstrahls 11 (vgl. Figur 4 mit Figur 6) und die geometrischen Strahlbreite 56 (siehe Figur 7) des Lichtstrahls derart optimiert werden, dass eine Beleuchtungsvorrichtung 4 mit einer besonders geringen Schichtdicke hergestellt werden kann, die gleichzeitig sicherstellt, dass die abgebeugten Lichtstrahlen 46 bereits in der diffus wirkenden Schicht 20 des Diffusorsubstrats 14 aneinander angrenzen oder sogar überlappen.

Der Abstand zwischen dem holographisch-optischen Auskoppelungssubstrat 10 und dem Diffusorsubstrat 14, insbesondere bis zur Streuschicht 20 des Diffusorsubstrats 14, kann zwischen 20 $\mu$m und 1 cm, bevorzugt zwischen 50 $\mu$m und 4 mm und besonders bevorzugt zwischen 100 $\mu$m und 500 $\mu$m liegen.

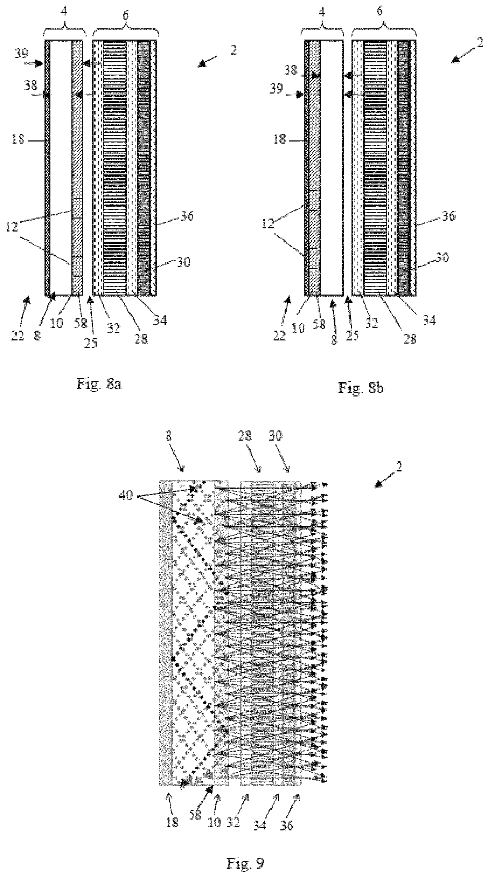

Die Figuren 8a und 8b zeigen jeweils eine weitere schematische Ansicht eines weiteren Ausführungsbeispiels eines Beleuchtungssystems 2 gemäß der vorliegenden Erfindung.

Das in der Figur 8a bzw. 8b dargestellte Ausführungsbeispiel weist eine Beleuchtungsvorrichtung 4 und eine Lichtmodulatoreinrichtung 6 auf. Die dargestellte Lichtmodulatoreinrichtung 6 entspricht im Wesentlichen der Lichtmodulatoreinrichtung 6 aus der Figur 1, so dass zur Vermeidung von Wiederholungen auf die entsprechenden Textstellen verwiesen wird.

Die Beleuchtungsvorrichtung 4 der Figur 8a unterscheidet sich von den zuvor beschriebenen Ausführungsbeispielen insbesondere darin, dass das Diffusormodul 58 in dem holographisch-optischen Auskoppelungssubstrat 10 integriert ist. Ein separates Diffusorsubstrat ist nicht erforderlich. Hierdurch kann insbesondere die Schichtdicke 39 der Beleuchtungsvorrichtung 4 weiter reduziert werden. Insbesondere wird die Schichtdicke 39 durch die Summe der Schichtdicke 38 des Lichtleitersubstrats 8 und der Schichtdicke des holographisch-optischen Auskoppelungssubstrats 10 im Wesentlichen bestimmt.

Wie bereits beschrieben wurde, ist die optische Funktion der diffusen Strahlaufweitung vorliegend durch das holographisch-optische Auskoppelungssubstrat 10 selbst umgesetzt. Die vorliegende Zwischenschicht 25 kann entsprechend den zuvor beschriebenen Zwischenschichten 24, 26 gebildet sein. Auch in diesem Fall überlappen sich die abgebeugten Strahlen bereits vor dem Austritt aus dem Diffusormodul 58.

Das in der Figur 8b dargestellte Ausführungsbeispiel der erfindungsgemäßen Beleuchtungsvorrichtung 4 unterscheidet sich von dem in Figur 8a dargestellten Ausführungsbeispiel dadurch, dass das holographisch-optische Auskoppelungssubstrat 10 an der anderen Oberflächeseite des Lichtleitersubstrats 8 angeordnet ist. Insbesondere grenzt in diesem Ausführungsbeispiel das holographisch-optische Auskoppelungssubstrat 10 an die optionale Reflexionsschicht 18.

In dem Ausführungsbeispiel gemäß der Figur 9 wird ein hinreichend breite geometrische Strahlbreite S verwendet, die zusammen mit dem Diffusormodul 58 eine homogene Intensitätsverteilung im holographisch-optischen Auskoppelungssubstrat 10 umfassend das Diffusormodul 58 ermöglicht. Das holographisch-optische Auskoppelungssubstrat 10 beugt das Laserlicht 40 in Richtung der Lichtmodulatoreinrichtung 6 derart ab, dass es zusätzlich diffus gestreut wird.

Die in den Figuren 8 und 9 dargestellten Ausführungsbeispiele einer Beleuchtungsvorrichtung 4 zeichnen sich insbesondere dadurch aus, dass eine diffuse Beugung im holographisch-optischen Auskoppelungssubstrat 10 erfolgt. Ferner ist vorteilhaft, wenn eine (nahezu) vollständige Beleuchtung des holographisch-optischen Auskoppelungssubstrats 10 erfolgt. Letztere kann dadurch erzielt werden, dass der gerichtete Lichtstrahl 40 mit einem angepassten Einstrahlwinkel des Lichtstrahls 40 und dessen effektive Apertur sowie die Schichtdicke 38 des Lichtleitersubstrats 8 derart gewählt sind, dass eine vollständige Beleuchtung des holographisch-optischen Auskoppelungssubstrat 10 erreicht wird.

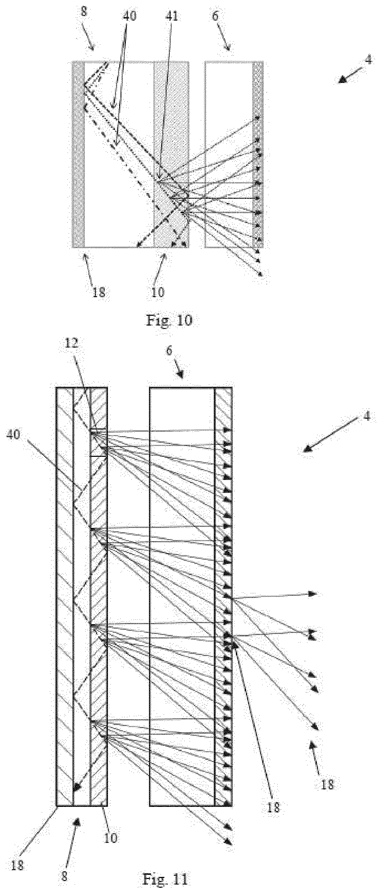

Figur 10 zeigt eine schematische Ansicht zur Darstellung einer Winkeldivergenz eines gerichteten Lichtstrahls in einem Lichtleitersubstrat 8 und einer Winkelakzeptanz des holographisch-optischen Auskoppelungssubstrat 10. Wie aus der Figur 10 zu erkennen ist, wird nur der mittlere Lichtstrahl 41 von den drei dargestellten Lichtstrahlen 40, 41 in einem Auskoppelungsbereich abgebeugt. Die Lichtstrahlen 40, welche gegenüber dem Lichtstrahl 41 einen (leicht) anderen Einfallswinkel aufweisen, werden nicht gebeugt. Dieser Effekt kann genutzt werden, wenn ein holographisch-optisches Auskoppelungssubstrat 10 aus mehreren frequenzselektiven Einzel- bzw. Teilhologrammen gebildet ist. Zum Beispiel können verschiedene Teilhologramme für rotes, grünes und blaues Laserlicht gebildet werden. Die Schichtdicke kann größer als 5 $\mu$m gewählt werden. Die Winkelselektion kann derart gesetzt werden, dass die Winkelselektion zwischen 1° und 6° liegt. Für dieses erfindungsgemäße Ausführungsbeispiel liegt die Laserstrahldivergenz ebenfalls in diesem Bereich, um effektiv Licht durch das holographisch-optische Auskoppelungssubstrat 10 abzubeugen. Der wesentliche Vorteil ist die Anpassungsmöglichkeit zur Vermeidung von chromatischen Aberrationen und eine generelle Farbanpassung durch die individuelle Anpassung der Beugungseffizienz für jede Farbe. Insbesondere ist es möglich, jedem der einzelnen Farblaser selektiv einen individuellen oder auch sämtlichen Farblasern den gleichen Winkelselektionsbereich zuzuordnen.

Die mindestens drei verschiedenen holographisch-optischen Einzelhologramme jeweils konfiguriert für eine Primärfarbe können ebenfalls in die gleiche oder aber in mehrere Schichten einbelichtet werden. Werden mehrere Schichten verwendet, können diese direkt aufeinander laminiert oder mittels Klebschichten verbunden werden.

Vorzugweise kann eine Schichtdicke des holographisch-optischen Auskoppelungssubstrats 10 im Bereich von zwischen 0,5 $\mu$m und 5 $\mu$m erzeugt werden. Hierdurch wird eine Winkelselektion von ca. 5° bis 30° erzeugt. In diesem Fall stellt die Strahldivergenz eine niedrige Anforderung an die Präzision der Lichtquellenmontage und hat den Vorteil, nur ein Einzelhologramm einbelichten zu müssen, das für alle Farben Licht umlenkt. Für eine effiziente Lichtnutzung ist es ferner bevorzugt, wenn die Strahldivergenz des Laserlichtes kleiner ist als der Winkelselektionsbereichs des holographisch-optischen Auskoppelungssubstrats 10.

Ein weiteres erfindungsgemäßes Ausführungsbeispiel einer Beleuchtungsvorrichtung 4 ist in Figur 11 gezeigt. In diesem Ausführungsbeispiel ist das holographisch-optische Auskoppelungssubstrat 10 dazu eingerichtet, den gerichteten Lichtstrahl 40 schräg auf den räumlichen (nicht dargestellten) Lichtmodulator zu lenken. Dies hat zur Folge, dass nur einem schräg zum LC-Display stehenden Betrachter das Sehen ermöglicht wird. Dies kann dann von Vorteil sein, wenn eine Displaymontage bei einer bestimmten Anwendung nicht anders möglich ist, aber der Betrachter von einer nicht zentralen Position das Display sehen sollte. Beispielhaft sei der Automobilbereich genannt.

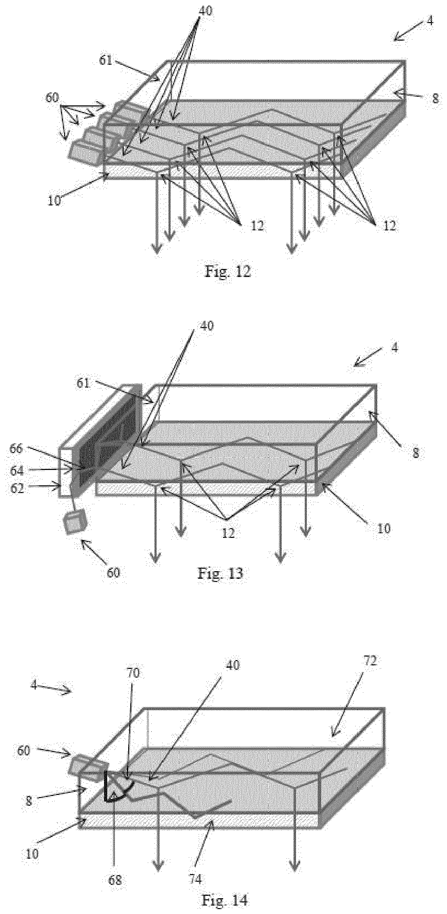

Figur 12 zeigt eine schematische Ansicht eines weiteren Ausführungsbeispiels eines Beleuchtungssystems gemäß der vorliegenden Erfindung. Insbesondere ist eine perspektivische Ansicht abgebildet. Wie aus der Figur 12 zu erkennen ist, sind an einer Kante 61 der Beleuchtungsvorrichtung 4, insbesondere des Lichtleitersubstrats 8, eine Mehrzahl von Lichterzeugungseinrichtungen 60 angeordnet. Bei den Lichterzeugungseinrichtungen 60 kann es sich um Laserlichtquellen 60 handeln.

Der in Figur 12 gezeigte Aufbau erlaubt die Strahlaufteilung durch das holographisch-optische Auskoppelungssubstrat 10 für jede Laserlichtquelle 60 separat. Dies hat den Vorteil, ein gutes thermisches Management zu ermöglichen, da hierbei lokal weniger Wärme durch die Laserlichtquellen 60 erzeugt wird und somit die Wärmeabführung besser gelingt.

Figur 13 zeigt eine schematische Ansicht eines weiteren Ausführungsbeispiels eines Beleuchtungssystems gemäß der vorliegenden Erfindung. Insbesondere ist wiederum eine perspektivische Ansicht abgebildet. Im vorliegenden Ausführungsbeispiel wird im Gegensatz zum vorherigen Ausführungsbeispiel nur eine Lichterzeugungseinrichtung 60, wie eine Laserlichtquelle 60, benötigt. Beispielsweise kann ein RGB Laser 60 eingesetzt werden.

Neben der einen Lichterzeugungseinrichtung 60 weist das vorliegende Beleuchtungssystem ein weiteres Lichtleitersubstrat 62 mit einem weiteren holographisch-optischen Auskoppelungssubstrat 64 auf. Das weitere Lichtleitersubstrat 62 ist seitlich am ersten Lichtleitersubstrat 8 positioniert. Das weitere Lichtleitersubstrat 62 steht insbesondere im optischen Kontakt mit dem weiteren holographisch-optischen Auskoppelungssubstrat 64.

Der von der Lichterzeugungseinrichtung 60 in das weitere Lichtleitersubstrat 62 eingekoppelte, gerichtete Lichtstrahl 66, insbesondere Laserstrahl 66, wird zunächst entlang des weiteren Lichtleitersubstrats 60 in zuvor beschriebener Weise in eine Vielzahl von gerichteten Lichtstrahlen 40, insbesondere Laserstrahlen 40, aufgeteilt, welche anschließend in das Lichtleitersubstrat 8 eingestrahlt werden.

In dem ersten Lichtleitersubstrat 8 erfolgt - wie zuvor beschrieben - eine Auskoppelung einer Mehrzahl von Lichtstrahlen in den Auskoppelungsbereichen 12. Der Vorteil von diesem Aufbau besteht darin, dass n*m Lichtstrahlen 40 aus einer Laserstrahllichtquelle 60 erzeugt werden können. Es versteht sich, dass mehrere Laserlichtquellen 60 eingesetzt werden können. Diese können alle in das weitere Lichtleitersubstrat 62 einkoppeln, um beispielsweise eine verbesserte Wärmeableitung zu ermöglichen und/oder um ein noch helleres Display herzustellen. Auch ist eine Positionierung auf der Rück- oder Vorderseite von dem Lichtleitersubstrat 8 bzw. dem holographisch-optischen Auskoppelungssubstrat 10 möglich.

Ein gewünschter Einstrahlwinkel $\alpha$ in das Lichtleitersubstrat 8 kann dadurch eingestellt werden, dass die Elemente 60 und 62 leicht gekippt sind. Alternativ kann das weitere holographisch-optische Auskoppelungssubstrat 64 derart belichtet werden, dass es bei orthogonaler Anordnung an 8 gleichzeitig mit dem Winkel $\alpha$ abstrahlt.

Figur 14 zeigt eine schematische und perspektivische Ansicht eines weiteren Ausführungsbeispiels eines Beleuchtungssystems gemäß der vorliegenden Erfindung. In diesem Ausführungsbeispiel ist gezeigt, dass der gerichtete Lichtstrahl, insbesondere ein Laserstrahl der Laserdiode 60, uniaxial in der Ebene des Lichtleitersubstrats 8 um den Winkel $\beta$ (70) vor der Einkopplung in das Lichtleitersubstrat 8 aufgeweitet werden kann. Mit anderen Worten kann die natürliche Divergenz eines Laserdiodenemitters 60 in der Richtung senkrecht zum Lichtleitersubstrat 8 genutzt werden. Bei einer geeigneten Wahl der Photopolymerschichtdicke und Belichtungsgeometrie kann die Beugungseffizienz für Lichtstrahlen, die in Figur 14 nach vorn (Lichtstrahl 74) bzw. nach hinten (Lichtstrahl 72) laufen, in einem weiten Winkelbereich fast so hoch wie die des geraden Lichtstrahls 40 gehalten werden. Der Vorteil einer entsprechenden Anordnung ist, dass die Anzahl der zu verwendenden Laserdioden, die für eine homogene Ausleuchtung notwendig sind, signifikant reduziert werden kann. Das Bezugszeichen 68 bezeichnet vorliegend den Einstrahlwinkel $\alpha$.

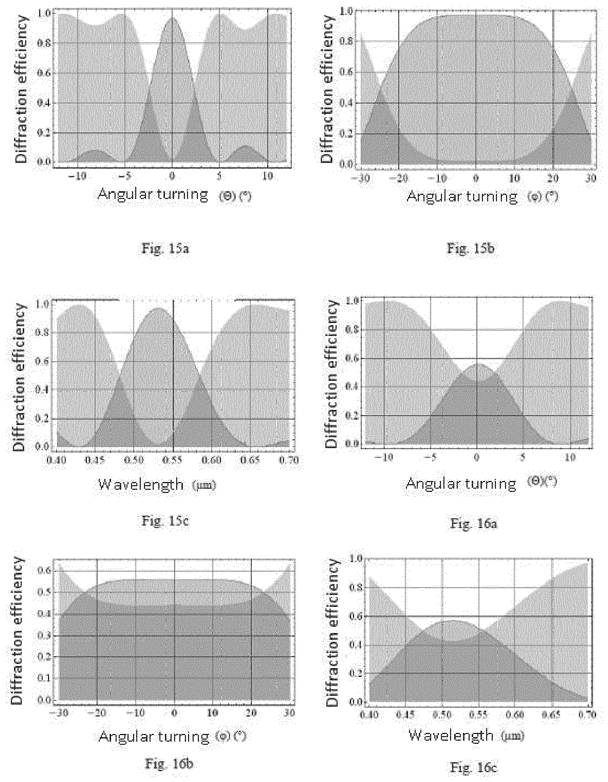

In den Figuren 15 bis 19 werden schematische Ansichten von Simulationsergebnissen nach Kogelnik mit Winkelakzeptanz als Funktion der Änderung des Einstrahlwinkels $\alpha$ um einen Winkel $\Theta$, Winkelakzeptanz als Funktion der Änderung des lateralen Einstrahlwinkels $\beta$ (70) um einen Winkel $\varphi$ und Wellenlängenakzeptanz in $\mu$m bei verschieden Lichtleitersubstraten gezeigt. Insbesondere sind verschiedene Kombinationen von Beugungseffizienzen als Funktion von Einstrahlwinkel $\alpha$ (Figur 14, siehe Bezugszeichen 68) und Einstrahldivergenz in der Ebene der Lichtwellenplatte (Figur 14, siehe Bezugszeichen 70) nach der Kogelnik-Theorie angegeben.

Die Figuren 15 a-c zeigen die Ergebnisse mit der Annahme einer Schichtdicke von 5 $\mu$m, einem Einkoppelwinkel $\alpha$ von 45° und eine Indexmodulation von 0,04.

Die Figuren 16 a-c zeigen die Ergebnisse mit der Annahme einer Schichtdicke von 3 $\mu$m, einem Einkoppelwinkel $\alpha$ von 45° und eine Indexmodulation von 0,04.

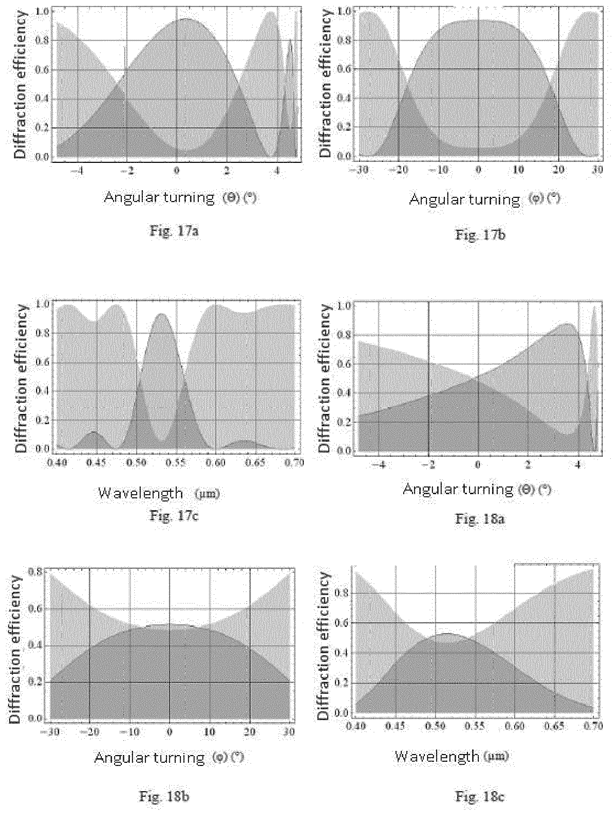

Die Figuren 17 a-c zeigen die Ergebnisse mit der Annahme einer Schichtdicke von 3 $\mu$m, einem Einkoppelwinkel $\alpha$ von 85° und eine Indexmodulation von 0,022.

Die Figuren 18 a-c zeigen die Ergebnisse mit der Annahme einer Schichtdicke von 1 $\mu$m, einem Einkoppelwinkel $\alpha$ von 85° und eine Indexmodulation von 0,04.

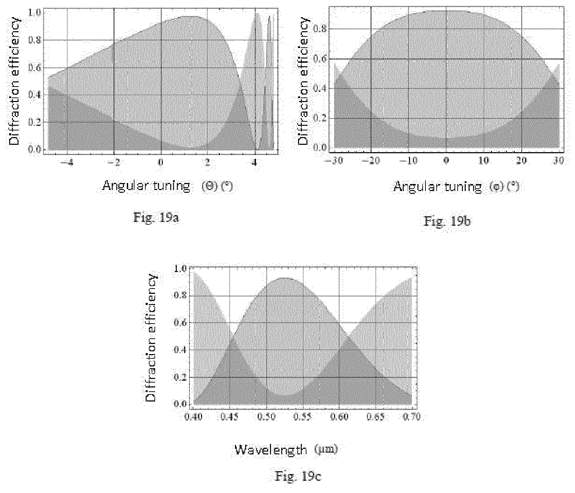

Die Figuren 19 a-c zeigen die Ergebnisse mit der Annahme einer Schichtdicke von 1 $\mu$m, einem Einkoppelwinkel $\alpha$ von 85° und eine Indexmodulation von 0,065.

Für diesen Fall der Lichteinkopplung ergeben sich weitere Vorzugsbereiche: Das holographisch-optische Auskoppelungssubstrat 10 kann durch ein monochromatisches, vorzugsweise mit einem grünen Laser von 500-600 nm, geschriebenes Hologramm gebildet werden, wenn die Schichtdicke des holographisch-optischen Auskoppelungssubstrat 10 zumindest kleiner 1 $\mu$m ist. Ebenfalls kann die Schichtdicke des holographisch-optischen Auskoppelungssubstrat 10 zumindest kleiner 3 $\mu$m ist und gleichzeitig der Einstrahlwinkel $\alpha$ zwischen dem Winkel der Totalreflexion arcsin ($1/n_1$) und 65°, vorzugsweise zwischen dem Winkel der Totalreflexion arcsin (1/ni) und 55° liegt.

Liegt die Schichtdicke des holographisch-optischen Auskoppelungssubstrat 10 über 5 $\mu$m bzw. liegt die Schichtdicke des holographisch-optischen Auskoppelungssubstrat 10 über 3 $\mu$m und der Winkel $\alpha$ über 65°, dann werden drei holographisch-optische Einzelelemente für jeweils eine der drei Primärfarben rot, grün und blau benötigt. Selbige können in drei einzelnen Schichten der jeweiligen Schichtdicke geschrieben werden oder alle drei in einer einzigen Schicht erzeugt werden.

Die notwendige Brechungsindexmodulation $\Delta$n, die in den Simulationen in den Figuren 15 bis 19 exemplarisch angegeben sind, werden dabei durch die Beugungseffizienz DE bestimmt und variieren daher. Dabei gilt Beugungseffizienz = Schichtdicke mal Brechungsindexmodulation. Da die Beugungseffizienz des holographisch-optischen Auskoppelungssubstrats 10 sich wie beschrieben ändert, kann die Brechungsindexmodulation vorzugsweise an den höchsten Wert der benötigten Beugungseffizienz angepasst sein. Wenn drei volumenholographische Einzelelemente in einer Schicht einbelichtet sind, so teilt sich die mögliche Brechungsindexmodulation summarisch auf diese drei Elemente auf.

Es ist besonders bevorzugt mittels monochromatischer Belichtung das holographisch-optische Auskoppelungssubstrat 10 bei einer Schichtdicke zwischen 2 $\mu$m und 3 $\mu$m zu erzeugen und einem Einstrahlwinkel $\alpha$ von mindestens 45° und kleiner als 65° zu verwenden.

Ebenfalls ist es möglich nur blau emittierende Laserlichtquellen für das erfindungsgemäße Beleuchtungssystem 2 zu verwenden. Im Farbfilter 30 wird dabei für die roten und die grünen Bildpunkte eine Farbkonversion durch entsprechend nach rot konvertierende bzw. nach grün konvertierende Q-dots (Quantendots, Halbleiterteilchen, deren Größe eine Lichtkonversion von kurznach längerwelligem Licht sehr frequenzselektiv ermöglicht) durchgeführt. Vorteil dieser Ausführungsform ist die hohe Lichteffizienz, da der Farbfilter kein Licht absorbiert, sondern nur konvertiert, bzw. für blaues Licht gar nicht beeinflußt. Weiterhin kann die Gestaltung der Beleuchtungsvorrichtung 4 durch ein ausschließlich monochromatisch (für blau) optimiertes Auskopplungssubstrat 10 einfacher aufgebaut werden. Es ergibt sich von selbst, daß in diesem Fall die Schichtdicke des Auskopplungssubstrats 10 keiner Eingrenzung bedarf, da die benötigte Frequenzbandbreite nur sehr schmal sein muss.

Alternativ können Qdots statt in dem Farbfilter 30 auch mit einer Mischung aus nach rot und grün konvertierender Qdots in der Zwischenschicht 24 und/oder 26 und/oder im Diffusorsubstrat 14 und/oder in dem transparenten Substart 19 und/oder in der diffus streuenden Schicht 20 verwendet werden. Für diesen Fall sind benötigt man wieder einen konventionellen Farbfilter 30. Vorteil einer solchen Ausführungsform ist, dass Qdots nicht pixelgenau im Farbfilter 30 eingebracht werden müssen und dass die Beleuchtungsvorrichtung 4 weiterhin nur monochromatisch optimiert sein muss.

Ein erfindungsgemäßes Beleuchtungssystem mit gerichtetem Laserlicht kann insbesondere in einer Flüssigkristallanzeige eingesetzt werden. Insbesondere kann ein derartiges Beleuchtungssystem Anwendung in elektronischen Displays mit besonders vorteilhaftem Farbraum in einem kompakten dünnen Design zum Einsatz kommen. Wenn auf die üblicherweise rückwärtigen Displaygehäuse verzichtet und keine rückwärtige Verspiegelungsschicht 18 genutzt wird, eignen sich diese Beleuchtungssysteme insbesondere auch für transparente Displays, welche vielfältige Anwendungen finden. Beispielhafte Anwendungen sind Point-of-Sale Displays, Werbeanwendungen in Schaufenstern, in durchsichtigen Informationstafeln auf Flughäfen, Bahnhöfen und anderen öffentlichen Plätzen, in Automobilanwendungen im Dachhimmel und als Informationsdisplays im und auf dem Armaturenbrett und der Fronscheibe, in Fensterglasscheiben, in Verkaufs-Kühlschränken mit durchsichtigen Türen, ggf. auch als gebogenes Display ausgeführt.

Weiterhin eignen sich diese Beleuchtungssysteme für einen Einsatz in Mobiltelefonen, Smartphones, Tablet-PCs, um entsprechende Geräte als besonders kompakte Baueinheiten herzustellen.

## Patentansprüche

1. Beleuchtungsvorrichtung (4) zum Beleuchten von mindestens einer Lichtmodulatoreinrichtung (6) einer Flüssigkristallanzeige, umfassend:

   - mindestens ein Lichtleitersubstrat (8) zum Leiten von mindestens einem in das Lichtleitersubstrat (8) einkoppelbaren, gerichteten Laserlichtstrahl (40),
   - wobei das Lichtleitersubstrat (8) mit mindestens einem holographisch-optischen Auskoppelungssubstrat (10) umfassend eine Mehrzahl von Auskoppelungsbereichen (12) zumindest in einem optischen Kontakt steht,
   - wobei ein Auskoppelungsbereich (12) zumindest dazu eingerichtet ist, einen Teil des gerichteten Laserlichtstrahls (40) in Form einer Vielzahl von Teilstrahlen (42, 44) in Richtung der Lichtmodulatoreinrichtung (6) auszukoppeln, wobei
   - das holographisch-optische Auskoppelungssubstrat (10) ein Reflektions- oder Transmissionvolumenhologramm, vorzugsweise ein mit der Edge-Lit Geometrie aufgezeichnetes Reflektions- oder Transmissionvolumenhologramm, ist.
   - mindestens ein Diffusormodul (14, 58) vorgesehen ist,
   - wobei das Diffusormodul (14, 58) eingerichtet ist, derart, dass zumindest die äußersten Teilstrahlen (46, 48) zweier benachbarter Auskoppelungsbereiche (12) vor dem Austritt aus dem Diffusormodul (14, 58) zumindest aneinander grenzen,
   - wobei das Diffusormodul (14) ein separates zwischen dem Lichtleitersubstrat (8) und dem zu beleuchtenden Lichtmodulator angeordnetes Diffusorsubstrat (14) ist, wobei das separate Diffusorsubstrat (14) zumindest eine transparente Schicht (19) und eine diffus streuende Schicht (20) aufweist,
   - wobei zwischen dem separaten Diffusormodul (14) und dem Lichtleitersubstrat (8) eine Zwischenschicht (24) angeordnet ist, wobei der Brechungsindex der Zwischenschicht (24) zumindest geringer als der Brechungsindex des Lichtleitersubstrats (8) ist,
   oder
   zwischen dem separaten Diffusorsubstrat (14) und dem holographisch-optischen Auskoppelungssubstrat (10) eine Zwischenschicht (24) angeordnet ist, wobei der Brechungsindex der Zwischenschicht (24) zumindest geringer als der Brechungsindex des holographisch-optischen Auskoppelungssubstrat (10) ist
   - und/oder
   das Diffusormodul (58) in dem holographisch-optischen Auskoppelungssubstrat (10) integriert ist,
   - wobei zwischen dem holographisch-optischen Auskoppelungssubstrat (10) und der Lichtmodulatoreinrichtung (6) eine Zwischenschicht (25) angeordnet ist, wobei der Brechungsindex der Zwischenschicht (25) zumindest geringer als der Brechungsindex des holographisch-optischen Auskoppelungssubstrats (10) ist,
oder
zwischen dem Lichtleitersubstrat (8) und der Lichtmodulatoreinrichtung (6) eine Zwischenschicht (25) angeordnet ist, wobei der Brechungsindex der Zwischenschicht (25) zumindest geringer als der Brechungsindex des Lichtleitersubstrats (8).

2. Beleuchtungsvorrichtung (4) nach Anspruch 1, **dadurch gekennzeichnet, dass** das holographisch-optische Auskoppelungssubstrat (10) eine Winkel aufweitende Funktion aufweist.

3. Beleuchtungsvorrichtung (4) nach einem der vorherigen Ansprüche, **dadurch gekennzeichnet, dass**

   - das holographisch-optische Auskoppelungssubstrat (10) eine Mehrzahl von Einzelhologrammmodulen aufweist,
   - wobei ein Einzelhologrammmodul dazu eingerichtet, eine bestimmte Primärfarbe zu beugen.

4. Beleuchtungsvorrichtung (4) nach einem der vorherigen Ansprüche, **dadurch gekennzeichnet, dass** das holographisch-optische Auskoppelungssubstrat (10) aus holographischen Silberhalogenidemulsionen, Dichromatgelatine, photorefraktive Materialien, photochrome Materialien oder Photopolymere, bevorzugt aus Photopolymeren enthaltend ein Photoinitiatorsystem und polymerisierbare Schreibmonomere, besonders bevorzugt Photopolymere enthaltend ein Photoinitiatorsystem, polymerisierbare Schreibmonomere und vernetzte Matrixpolymere, ganz besonders bevorzugt aus Photopolymere enthaltend ein Photoinitiatorsystem, ein polymerisierbares Schreibmonomer, eine vernetzte Matrix und ein Urethan, das mit mindestens einem Fluor-Atom substituiert ist, gebildet ist.

5. Beleuchtungsvorrichtung (4) nach einem der vorherigen Ansprüche, **dadurch gekennzeichnet, dass** die Schichtdicke (38) des Lichtleitersubstrats (8) zwischen 30 μm und 10 mm, bevorzugt zwischen 100 μm und 2 mm, und besonders bevorzugt zwischen 300 μm und 1 mm liegt.

6. Beleuchtungsvorrichtung (4) nach einem der vorherigen Ansprüche, **dadurch gekennzeichnet, dass** die Schichtdicke (38) des Lichtleitersubstrats (8) derart gebildet ist, dass die Schichtdicke (38) des Lichtleitersubstrats (8) im Wesentlichen der Strahlbreite eines in das Lichtleitersubstrat (8) eingekoppelten, gerichteten Laserlichtstrahls (40) entspricht.

7. Beleuchtungsvorrichtung (4) nach einem der vorherigen Ansprüche, **dadurch gekennzeichnet, dass** das holographisch-optischen Auskoppelungssubstrat (10) eine Winkeldivergenz zwischen 1° und 120°, bevorzugt zwischen 5° und 60° und besonders bevorzugt zwischen 10° und 45° aufweist.

8. Beleuchtungssystem (2), umfassend:

   - mindestens eine Beleuchtungsvorrichtung (4) nach einem der vorherigen Ansprüche, und
   - mindestens eine Lichterzeugungseinrichtung (60) zum Einkoppeln von mindestens einem gerichteten Laserlichtstrahl (40) in das Lichtleitersubstrat (8) der Beleuchtungsvorrichtung (4).

9. Beleuchtungssystem (2) nach Anspruch 8, **dadurch gekennzeichnet, dass** die Lichterzeugungseinrichtung (60) derart angeordnet ist, dass der gerichtete Laserlichtstrahl (40) bezogen auf die Flächennormale des Lichtleitersubstrats (8) einen Einkoppelwinkel zwischen dem Winkel der Totalreflexion arcsin $(1/n_1)$ und 85°, bevorzugt 75°, besonders bevorzugt 65° und ganz besonders bevorzugt 55° einschließt, wobei $n_1$ der Brechungsindex des Lichtleitersubstrats (8) ist.

10. Beleuchtungssystem (2) nach einem der Ansprüche 8 oder 9, **dadurch gekennzeichnet, dass** die Lichterzeugungseinrichtung (60) derart eingerichtet ist, dass die geometrische Strahlbreite des gerichteten Laserlichtstrahls (40) zwischen 0,05 mm und 1 cm, bevorzugt 0,1 mm und 4 mm und besonders bevorzugt zwischen 0,3 mm und 2 mm liegt.

11. Beleuchtungssystem (2) nach einem der Ansprüche 8 bis 10, **dadurch gekennzeichnet, dass**

   - das holographisch-optische Auskoppelungssubstrat (10) monochromatisch geschrieben ist, wenn die Schichtdicke des holographisch-optischen Auskoppelungssubstrats (10) zumindest kleiner als 1 μm ist oder wenn die Schichtdicke des holographisch-optischen Auskoppelungssubstrats (10) zumindest kleiner als 3 μm ist und der

Einkoppelwinkel zwischen dem gerichteten Laserlichtstrahl (60) und der Flächennormalen zwischen dem Winkel der Totalreflexion arcsin (1/n$_1$) und 65°, vorzugsweise zwischen dem Winkel der Totalreflexion arcsin (1/n$_1$) und 55° liegt, oder
- das holographisch-optische Auskoppelungssubstrat (10) mit mindestens drei vorzugsweise roten, grünen und blauen Lasern geschrieben ist, wenn die Schichtdicke des holographisch-optischen Auskoppelungssubstrats (10) zumindest über 5 μm liegt oder die Schichtdicke des holographisch-optischen Auskoppelungssubstrats (10) zumindest über 3 μm liegt und der Einkoppelwinkel zwischen dem gerichteten Laserlichtstrahl (60) und der Flächennormalen zwischen dem Winkel der Totalreflexion arcsin (1/n$_1$) und über 65° liegt.

**12.** Beleuchtungssystem (2) nach einem der vorherigen Ansprüche 8 bis 11, **dadurch gekennzeichnet, dass**

- an mindestens einer Kante (61) des Lichtleitersubstrats (8) mindestens ein weiteres Lichtleitersubstrat (62) angeordnet ist,
- wobei das weitere Lichtleitersubstrat (62) mit mindestens einem weiteren holographisch-optischen Auskoppelungssubstrat (64) umfassend eine Mehrzahl von Auskoppelungsbereichen in optischen Kontakt steht,
- mindestens eine Lichterzeugungseinrichtung (60) zum Einkoppeln von mindestens einem gerichteten Laserlichtstrahl (66) in das weitere Lichtleitersubstrat (62) vorgesehen ist, und
- wobei ein Auskoppelungsbereich dazu eingerichtet ist, einen Teil des gerichteten Laserlichtstrahls (66) in Form von mindestens einem gerichteten Teilstrahl (40) in Richtung der Kante (61) des Lichtleitersubstrats (8) auszukoppeln.

**13.** Beleuchtungssystem (2) nach einem der vorherigen Ansprüche 8 bis 12, **dadurch gekennzeichnet, dass**

- die Lichterzeugungseinrichtung (60) eingerichtet ist, Licht im Wesentlichen monochromatisch im Bereich von 420 bis 485 nm, bevorzugt im Bereich von 430 bis 480 nm und besonders bevorzugt im Bereich von 440 bis 465 nm zu emittieren,
- wobei die Beleuchtungsvorrichtung (4) das emittierte Licht zu einer Lichtmodulatoreinrichtung (6) umlenkt, und
- die Lichtmodulatoreinrichtung (6) eine konvertierende Quantendots aufweisende Schicht (30) aufweist, wobei die Quantendots vorzugsweise von blau nach grün und/oder von blau nach rot konvertierende Quantendots sind.

**14.** Flüssigkristallanzeige umfassend ein Beleuchtungssystem (2) nach einem der vorherigen Ansprüche 8 bis 13.

**Claims**

**1.** Illumination apparatus (4) for illuminating at least one light modulator device (6) of a liquid-crystal display, comprising:

- at least one light guide substrate (8) for guiding at least one directional laser light beam (40) which can be coupled into the light guide substrate (8),
- the light guide substrate (8) being at least in optical contact with at least one holographic-optical output coupling substrate (10) comprising a multiplicity of output coupling regions (12),
- an output coupling region (12) being at least adapted in order to couple out a part of the directional laser light beam (40) in the form of a multiplicity of subbeams (42, 44) in the direction of the light modulator device (6),

wherein

- the holographic-optical output coupling substrate (10) is a reflection or transmission volume hologram, preferably a reflection or transmission volume hologram recorded using the edge-lit geometry,
- at least one diffuser module (14, 58) is provided,
- wherein the diffuser module (14, 58) is adapted in such a way that at least the outermost subbeams (46, 48) of two neighbouring output coupling regions (12) at least adjoin one another before exit from the diffuser module (14, 58),
- the diffuser module (14) is a separate diffuser substrate (14) arranged between the light guide substrate (8) and the light modulator to be illuminated, wherein the separate diffuser substrate (14) comprises at least one transparent layer (19) and one diffusely scattering layer (20),

    - wherein an interlayer (24) is arranged between the separate diffuser substrate (14) and the light guide substrate (8), the refractive index of the interlayer (24) being at least less than the refractive index of the light guide substrate (8), or
- an interlayer (24) is arranged between the separate diffuser substrate (14) and the holographic-optical output coupling substrate (10), the refractive index of the interlayer (24) being at least less than the refractive index of the holographic-optical output coupling substrate (10),

- and/or
the diffuser module (58) is integrated in the holographic-optical output coupling substrate (10),

- wherein an interlayer (25) is arranged between the holographic-optical output coupling substrate (10) and the light modulator device (6), the refractive index of the interlayer (25) being at least less than the refractive index of the holographic-optical output substrate (10), or
- an interlayer (25) is arranged between the light guide substrate (8) and the light modulator device (6), the refractive index of the interlayer (25) being at least less than the refractive index of the light guide substrate (8).

2. Illumination apparatus (4) according to Claim 1, **characterized in that** the holographic-optical output coupling substrate (10) has an angle-widening function.

3. Illumination apparatus (4) according to one of the preceding claims, **characterized in that**

- the holographic-optical output coupling substrate (10) comprises a multiplicity of individual hologram modules,
- wherein an individual hologram module is adapted in order to diffract a particular primary colour.

4. Illumination apparatus (4) according to one of the preceding claims, **characterized in that** the holographic-optical output coupling substrate (10) is formed from holographic silver halide emulsions, dichromatic gelatins, photorefractive materials, photochromic materials or photopolymers, preferably from photopolymers containing a photoinitiator system and polymerizable writing monomers, particularly preferably photopolymers containing a photoinitiator system, polymerizable writing monomers and crosslinked matrix polymers, more particularly preferably from photopolymers containing a photoinitiator system, a polymerizable writing monomer, a crosslinked matrix and a urethane, which is substituted with at least one fluorine atom.

5. Illumination apparatus (4) according to one of the preceding claims, **characterized in that** the layer thickness (38) of the light guide substrate (8) lies between 30 $\mu$m and 10 mm, preferably between 100 $\mu$m and 2 mm, and particularly preferably between 300 $\mu$m and 1 mm.

6. Illumination apparatus (4) according to one of the preceding claims, **characterized in that** the layer thickness (38) of the light guide substrate (8) is formed in such a way that the layer thickness (38) of the light guide substrate (8) essentially corresponds to the beam width of a directional laser light beam (40) coupled into the light guide substrate (8).

7. Illumination apparatus (4) according to one of the preceding claims, **characterized in that** the holographic-optical output coupling substrate (10) has an angular divergence of between 1° and 120°, preferably between 5° and 60°, and particularly preferably between 10° and 45°.

8. Illumination system (2), comprising:

- at least one illumination apparatus (4) according to one of the preceding claims, and
- at least one light generation device (60) for coupling at least one directional laser light beam (40) into the light guide substrate (8) of the illumination apparatus (4).

9. Illumination system (2) according to Claim 8, **characterized in that** the light generation device (60) is arranged in such a way that the directional laser light beam (40) makes an input angle with respect to the surface normal of the light guide substrate (8) between the total reflection angle arcsin ($1/n_1$) and 85°, preferably 75°, particularly preferably 65° and more particularly preferably 55°, where $n_1$ is the refractive index of the light guide substrate (8).

10. Illumination system (2) according to either of Claims 8 and 9, **characterized in that** the light generation device (60) is adapted in such a way that the geometrical beam width of the directional laser light beam (40) lies between 0.05 mm and 1 cm, preferably between 0.1 mm and 4 mm, and particularly preferably between 0.3 mm and 2 mm.

**11.** Illumination system (2) according to one of Claims 8 to 10, **characterized in that**

- the holographic-optical output coupling substrate (10) is written monochromatically when the layer thickness of the holographic-optical output coupling substrate (10) is at least less than 1 $\mu$m or when the layer thickness of the holographic-optical output coupling substrate (10) is at least less than 3 $\mu$m and the input angle between the directional laser light beam (60) and the surface normal lies between the total reflection angle arcsin $(1/n_1)$ and 65°, preferably between the total reflection angle arcsin $(1/n_1)$ and 55°, or
- the holographic-optical output coupling substrate (10) is written with at least three lasers, preferably red, green and blue lasers, when the layer thickness of the holographic-optical output coupling substrate (10) is at least more than 5 $\mu$m or the layer thickness of the holographic-optical output coupling substrate (10) is at least more than 3 $\mu$m and the input angle between the directional laser light beam (60) and the surface normal lies between the total reflection angle arcsin $(1/n_1)$ and more than 65°.

**12.** Illumination system (2) according to one of preceding Claims 8 to 11, **characterized in that**

- at least one further light guide substrate (62) is arranged on at least one edge (61) of the light guide substrate (8),
- the further light guide substrate (62) being in optical contact with at least one further holographic-optical output coupling substrate (64) comprising a multiplicity of output coupling regions,
- at least one light generation device (60) is provided for coupling at least one directional laser light beam (66) into the further light guide substrate (62), and
- an output coupling region being adapted in order to couple out a part of the directional laser light beam (66) in the form of at least one directional subbeam (40) in the direction of the edge (61) of the light guide substrate (8).

**13.** Illumination system (2) according to one of preceding Claims 8 to 12, **characterized in that**

- the light generation device (60) is adapted in order to emit light essentially monochromatically in the range of from 420 to 485 nm, preferably in the range of from 430 to 480 nm, and particularly preferably in the range of from 440 to 465 nm,
- the illumination apparatus (4) deviating the emitted light to a light modulator device (6), and
- the light modulator device (6) comprises a layer (30) having converting quantum dots, the quantum dots preferably being quantum dots converting from blue to green and/or from blue to red.

**14.** Liquid-crystal display comprising an illumination system (2) according to one of preceding Claims 8 to 13.

**Revendications**

**1.** Dispositif d'éclairage (4) destiné à éclairer au moins un moyen modulateur de lumière (6) d'un affichage à cristaux liquides, ledit dispositif comprenant :

- au moins un substrat conducteur de lumière (8) destiné à conduire au moins un faisceau de lumière laser orienté (40) qui peut être injecté par couplage dans le substrat conducteur de lumière (8),
- le substrat conducteur de lumière (8) étant au moins en contact optique avec au moins un substrat de sortie par couplage holographique-optique (10) qui comprend une pluralité de zones de sortie par couplage (12),
- une zone de sortie par couplage (12) étant au moins adaptée pour délivrer en sortie par couplage une partie du faisceau de lumière laser orienté (40) sous la forme d'une pluralité de faisceaux partiels (42, 44) en direction du moyen modulateur de lumière (6),
- le substrat de sortie par couplage holographique-optique (10) étant un hologramme de volume de transmission ou de réflexion, de préférence un hologramme de volume de transmission ou de réflexion enregistré avec une géométrie à éclairage périphérique,
- au moins un module diffuseur (14, 58) étant prévu,
- le module diffuseur (14, 58) étant adapté de telle sorte qu'au moins les faisceaux partiels les plus à l'extérieur (46, 48) de deux zones de sortie par couplage adjacentes (12) soient adjacents au moins avant de sortir du module diffuseur (14, 58)
- le module diffuseur (14) étant un substrat diffuseur (14) séparé entre le substrat conducteur de lumière (8) et le modulateur de lumière à éclairer, le substrat diffuseur séparé (14) comportant au moins une couche transparente (19) et une couche diffusante (20),
- une couche intermédiaire (24) étant disposée entre le module diffuseur séparé (14) et le substrat conducteur de lumière (8), l'indice de réfraction de la couche intermédiaire (24) étant au moins inférieur à l'indice de réfraction du substrat conducteur de lumière (8), ou

une couche intermédiaire (24) étant disposée entre le substrat diffuseur séparé (14) et le substrat de sortie par couplage holographique-optique (10), l'indice de réfraction de la couche intermédiaire (24) étant au moins inférieur à l'indice de réfraction du substrat de sortie par couplage holographique-optique (10)

- et/ou
le module diffuseur (58) étant intégré dans le substrat de sortie par couplage holographique-optique (10),
- une couche intermédiaire (25) étant disposée entre le substrat de sortie par couplage holographique-optique (10) et le dispositif modulateur de lumière (6), l'indice de réfraction de la couche intermédiaire (25) étant au moins inférieur à l'indice de réfraction du substrat de sortie par couplage holographique-optique (10), ou
une couche intermédiaire (25) étant disposée entre le substrat conducteur de lumière (8) et le dispositif modulateur de lumière (6), l'indice de réfraction de la couche intermédiaire (25) étant au moins inférieur à l'indice de réfraction du substrat conducteur de lumière (8).

2. Dispositif d'éclairage (4) selon la revendication 1, **caractérisé en ce que** le substrat de sortie par couplage holographique-optique (10) a une fonction d'élargissement angulaire.

3. Dispositif d'éclairage (4) selon l'une des revendications précédentes, **caractérisé en ce que** le substrat de sortie par couplage holographique-optique (10) comporte une pluralité de modules d'hologramme uniques, un module d'hologramme unique étant adapté pour diffracter une couleur primaire spécifique.

4. Dispositif d'éclairage (4) selon l'une des revendications précédentes, **caractérisé en ce que** le substrat de sortie par couplage holographique-optique (10) est formé d'émulsions d'halogénures d'argent holographiques, de gélatine bichromatée, de matières photoréfractives, de matières photochromes ou de photopolymères, de préférence de photopolymères contenant un système photoinitiateur et de monomères d'écriture polymérisables, de manière particulièrement préférée des photopolymères contenant un système photoinitiateur, des monomères d'écriture polymérisables et des polymères de matrice réticulée, de manière tout particulièrement préférée des photopolymères contenant un système photoinitiateur, un monomère d'écriture polymérisable, une matrice réticulée et un uréthane qui est substitué par au moins un atome de fluor.

5. Dispositif d'éclairage (4) selon l'une des revendications précédentes, **caractérisé en ce que** l'épaisseur de couche (38) du substrat conducteur de lumière (8) est comprise entre 30 $\mu$m et 10 mm, de préférence entre 100 $\mu$m et 2 mm, et de manière particulièrement préférée entre 300 $\mu$m et 1 mm.

6. Dispositif d'éclairage (4) selon l'une des revendications précédentes, **caractérisé en ce que** l'épaisseur de couche (38) du substrat conducteur de lumière (8) est formée de telle sorte que l'épaisseur de couche (38) du substrat conducteur de lumière (8) corresponde sensiblement à la largeur de faisceau d'un faisceau de lumière laser orienté (40) qui est injecté par couplage dans le substrat conducteur de lumière (8) .

7. Dispositif d'éclairage (4) selon l'une des revendications précédentes, **caractérisé en ce que** le substrat de sortie par couplage holographique-optique (10) présente une divergence angulaire comprise entre 1° et 120°, de préférence entre 5° et 60° et de manière particulièrement préférée entre 10° et 45°.

8. Système d'éclairage (2), comprenant :

- au moins un dispositif d'éclairage (4) selon l'une des revendications précédentes, et
- au moins un moyen générateur de lumière (60) destiné à injecter par couplage au moins un faisceau de lumière laser orienté (40) dans le substrat conducteur de lumière (8) du dispositif d'éclairage (4).

9. Système d'éclairage (2) selon la revendication 8, **caractérisé en ce que** le moyen générateur de lumière (60) est agencé de telle sorte que le faisceau de lumière laser orienté (40) forme par rapport à la normale de surface du substrat conducteur de lumière (8) un angle d'injection par couplage compris entre l'angle de réflexion totale arcsin ($1/n_1$) et 85°, de préférence 75°, de manière particulièrement préférée 65° et de manière tout particulièrement préférée 55°, $n_1$ étant l'indice de réfraction du substrat conducteur de lumière (8).

**10.** Système d'éclairage (2) selon l'une des revendications 8 ou 9, **caractérisé en ce que** le moyen générateur de lumière (60) est adapté de telle sorte que la largeur de faisceau géométrique du faisceau de lumière laser orienté (40) soit comprise entre 0,05 mm et 1 cm, de préférence 0,1 mm et 4 mm et de manière particulièrement préférée entre 0,3 mm et 2 mm.

**11.** Système d'éclairage (2) selon l'une des revendications 8 à 10, **caractérisé en ce que**

- le substrat de sortie par couplage holographique-optique (10) est écrit de manière monochromatique lorsque l'épaisseur de couche du substrat de sortie par couplage holographique-optique (10) est au moins inférieure à 1 $\mu$m ou lorsque l'épaisseur de couche du substrat de sortie par couplage holographique-optique (10) est au moins inférieure à 3 $\mu$m et l'angle d'injection par couplage formé entre le faisceau de lumière laser orienté (60) et la normale de surface est situé entre l'angle de réflexion totale arcsin $(1/n_1)$ et 65°, de préférence entre l'angle de réflexion totale arcsin $(1/n_1)$ et 55°, ou
- le substrat de sortie par couplage optique holographique (10) est écrit avec au moins trois lasers, de préférence rouge, vert et bleu, lorsque l'épaisseur de couche du substrat de sortie par couplage holographique-optique (10) est au moins supérieure à 5 $\mu$m ou l'épaisseur de couche du substrat de sortie par couplage holographique-optique (10) est au moins supérieure à 3 $\mu$m et l'angle d'injection par couplage formé entre le faisceau de lumière laser orienté (60) et la normale de surface est situé entre l'angle de réflexion totale arcsin $(1/n_1)$ et plus de 65°.

**12.** Système d'éclairage (2) selon l'une des revendications précédentes 8 à 11, **caractérisé en ce que**

- au moins un autre substrat conducteur de lumière (62) est disposé sur au moins un bord (61) du substrat conducteur de lumière (8),
- l'autre substrat conducteur de lumière (62) étant en contact optique avec au moins un autre substrat de sortie par couplage holographique-optique (64) comprenant une pluralité de zones de sortie par couplage,
- au moins un moyen générateur de lumière (60) est prévu pour injecter par couplage au moins un faisceau de lumière laser orienté (66) dans l'autre substrat conducteur de lumière (62), et
- une zone de sortie par couplage étant adaptée pour délivrer en sortie par couplage une partie du faisceau de lumière laser orienté (66) sous la forme d'au moins un faisceau partiel orienté (40) en direction du bord (61) du substrat de sortie par couplage (8).

**13.** Système d'éclairage (2) selon l'une des revendications précédentes 8 à 12, **caractérisé en ce que**

- le moyen générateur de lumière (60) est adapté pour émettre une lumière sensiblement monochromatique dans la plage de 420 à 485 nm, de préférence dans la plage de 430 à 480 nm et de manière particulièrement préférée dans la plage de 440 à 465 nm,
- le dispositif d'éclairage (4) déviant la lumière émise vers un moyen modulateur de lumière (6), et
- le dispositif modulateur de lumière (6) comporte une couche (30) pourvue de points quantiques de conversion, les points quantiques étant de préférence des points quantiques de conversion du bleu au vert et/ou du bleu au rouge.

**14.** Affichage à cristaux liquides comprenant un système d'éclairage (2) selon l'une des revendications précédentes 8 à 13.

Fig. 1

Fig. 2a

Fig. 2b

Fig. 3

Fig. 4

Fig. 5

Fig. 6

Fig. 7

Fig. 8a

Fig. 8b

Fig. 9

Fig. 10

Fig. 11

Fig. 12

Fig. 13

Fig. 14

Fig. 15a

Fig. 15b

Fig. 15c

Fig. 16a

Fig. 16b

Fig. 16c

Fig. 17a

Fig. 17b

Fig. 17c

Fig. 18a

Fig. 18b

Fig. 18c

Fig. 19a

Fig. 19b

Fig. 19c

**EP 2 883 091 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070081359 A1
- US 20060279296 A1
- US 5854697 A
- EP 2172505 A1
- WO 2011054796 A
- WO 2011054749 A1
- WO 2010091795 A
- EP 2218742 A